# EUROPÄISCHE PATENTANMELDUNG

(11) **EP 4 841 838 A1**
(43) Veröffentlichungstag der Anmeldung: **18.11.2026**
(21) Anmeldenummer: 25204387.2
(22) Anmeldetag: 24.09.2025
(51) Int. Cl.: H02G 1/08, H02G 9/04, H02G 9/06, H02G 3/04, H02G 3/06, H02G 9/10

(54) **KABELKANALSYSTEM SOWIE VERFAHREN ZUR VERLEGUNG VON KABELN MIT DEM KABELKANALSYSTEM**

(30) Priorität: 16.05.2025 EP 25177074
(71) Anmelder: Building Infrastructure Construction AG, 64367 Mühltal (DE)
(72) Erfinder: Dumlupinar, Cem Özgür, 64367 Mühltal (DE)
(74) Vertreter: Kudla, Karsten

(57) **Zusammenfassung**

Die Erfindung betrifft ein Kabelkanalsystem zur Unterbodenverlegung von Kabeln (51), umfassend einen Kanal und einen Zugangsschacht (31), wobei der Zugangsschacht (31) eine Zugangsöffnung und mindestens eine Anschlussöffnung (37) oder Anschlusswanne (35) für den Kanal aufweist, wobei nach Verlegung des Kabelkanalsystems die Zugangsöffnung mit der Umgebungsoberfläche bündig abschließt und die mindestens eine Anschlussöffnung (37) vollständig unterhalb der Umgebungsoberfläche angeordnet ist, wobei der Kanal modular aus Wannen (1; 35) und Deckeln (13) aufgebaut ist und die Deckel (13) von oben auf die Wannen (1; 35) aufsetzbar sind und nach dem Aufsetzen die Wannen (1; 35) dicht verschließen. Die Erfindung betrifft weiterhin ein Verfahren zur Verlegung von Kabeln mit dem Kabelkanalsystem.

## Beschreibung

Die Erfindung betrifft ein Kabelkanalsystem zur Unterbodenverlegung von Kabeln, umfassend einen Kanal und einen Zugangsschacht.

Um Gebäude an Versorgungsnetze anzuschließen, beispielsweise Stromnetze oder Datennetze, werden üblicherweise Kabel entlang von Straßen oder Gehwegen verlegt. An den zu versorgenden Gebäuden zweigen Zugangsleitungen von den entlang der Straßen oder Gehwege verlegten Kabel ab und stellen so die Versorgung des Gebäudes her.

Derzeit werden die Kabel zum Beispiel in Leerrohren verlegt, wozu zunächst Leerrohre in einer Tiefe zwischen 30 und 60 cm verlegt werden. Anschließend werden die Kabel durch die Leerrohre geblasen. Nachteil dieser Systeme ist, dass sich Feuchtigkeit in den Rohren sammeln kann und die eingesetzten dünnwandigen Rohre in einer ausreichenden Tiefe verlegt werden müssen, da sie nicht als tragende Struktur geplant und daher anfällig für Druck- und Stoßschäden sind. Ein weiterer Nachteil ist, dass die Verlegung in zwei Phasen erfolgen muss, nämlich zunächst die Verlegung der Rohre durch Tiefbauspezialisten und nachfolgend die Verlegung der Kabel durch entsprechende Fachleute, so dass verschiedene Unternehmen koordiniert werden müssen, wodurch Zeit und Kosten erhöht werden.

Neben der Verlegung in Leerrohren ist auch bekannt, Rinnensysteme zu nutzen, in denen die Kabel oberirdisch oder halboberirdisch verlegt werden können.

Ein Rinnensystem zur Verlegung von Kabeln, dessen Deckel bündig mit der Bodenoberfläche, beispielsweise einer Gehwegfläche abschließt, ist in der DE-A 2 249 685 beschrieben. Um in das Rinnensystem eindringendes Wasser abzuleiten weisen die Rinnen an ihrer Unterseite Löcher auf, die mit einem vertikal verlegten und mit einem Material, das ein Ablaufen des Wassers ermöglicht, befüllten Rohr verbunden sind.

Aus der DE-B 1 515 669 ist es bekannt, zur Verlegung von Stromversorgungs- und Fernsprechleitungen einen Kabelkanal vorzusehen, der durch aneinandergereihte hohle Randformsteine gebildet wird. Die Randformsteine weisen jeweils ein Unterteil und einen Deckel auf.

Vorgefertigte Kabelkanäle aus Beton, die in einen Kabelgraben eingesetzt und mit Deckeln aus Beton verschlossen werden, sind aus der DE-U 1 862 431 bekannt. Auch hier werden die Kabelkanäle so verlegt, dass der Deckel bündig mit einer Gehwegoberfläche abschließt.

Eine Vorrichtung zur Verlegung von Kabeln, beispielsweise Glasfaserkabeln, in einem Schlitz ist in der WO-A 2023/023679 beschrieben. Oberhalb der Leitung erstreckt sich eine Abdeckung, die aus Teilstücken besteht, die jeweils an seitlichen Begrenzungsflächen des Schlitzvolumens nach unten abgestützt sind. Die Teilstücke sind dabei gelenkig so miteinander verbunden, dass diese relativ zueinander um eine vertikale Achse schwenkbar sind. Auch hier befindet sich die Abdeckung bündig zur Bodenoberfläche, insbesondere einer Gehwegoberfläche oder einer Straße.

Nachteil dieser Systeme ist, dass sie nicht für größere Verkehrslasten ausgelegt sind und zudem durch den Verlauf an der Oberfläche Schmutz und Feuchtigkeit eindringen können. Des Weiteren haben diese Systeme den Nachteil, dass bei einer notwendigen Reparatur an der Straße oder am Gehweg darauf geachtet werden muss, die Rinnen und insbesondere die Kabel nicht zu beschädigen.

Aufgabe der vorliegenden Erfindung war es daher, ein Kabelkanalsystem bereitzustellen, das eine gleichzeitige Verlegung des Kanalsystems und der Kabel ermöglicht und das nicht die Nachteile der bekannten Rinnen aufweist. Weiterhin war es Aufgabe der vorliegenden Erfindung, ein Verfahren zur Verlegung von Kabeln mit dem Kabelkanalsystem bereitzustellen.

Die Aufgabe wird gelöst durch ein Kabelkanalsystem zur Unterbodenverlegung von Kabeln, umfassend einen Kanal und einen Zugangsschacht, wobei der Zugangsschacht eine Zugangsöffnung und mindestens eine Anschlussöffnung oder Anschlusswanne für den Kanal aufweist, wobei nach Verlegung des Kabelkanalsystems die Zugangsöffnung mit der Umgebungsoberfläche bündig abschließt und die mindestens eine Anschlussöffnung vollständig unterhalb der Umgebungsoberfläche angeordnet ist, wobei der Kanal modular aus Wannen und Deckeln aufgebaut ist und die Deckel von oben auf die Wannen aufsetzbar sind und nach Aufsetzen die Wanne verschließen.

Der Einsatz von Wannen, die mit einem Deckel verschlossen werden, und die mit Zugangsschächten verbunden sind, erlaubt eine sogenannten Mindertiefenverlegung, bei der der Graben, in den die Wannen eingelegt werden, weniger tief ausgehoben werden muss als bei der derzeit üblichen Verlegung in Rohren, die in einer Tiefe von 30 bis 60 cm verlegt werden. Ein weiterer Vorteil der Verwendung von Wannen mit Deckeln ist, dass direkt im Anschluss an das Einlegen der Wannen in den Graben die Kabel eingelegt werden können. Hierbei wird die Kabellänge so gewählt, dass diese jeweils von einem Zugangsschacht bis zu einem nachfolgenden Zugangsschacht verlegt werden können, so dass im Kanal keine Verbindungsstellen enthalten sind. Dies hat den Vorteil, dass die Kabel modular jeweils von einem zum nachfolgenden Zugangsschacht verlegt werden können und damit möglich ist, die Kabel unmittelbar nach dem Einsetzen der Wannen in einen Kanal zu verlegen. Die Kabel werden hierzu vorzugsweise so konfektioniert, dass deren Länge des Kabelkanals zwischen zwei Zugangsschächten entspricht.

An den Enden weisen die Kabel vorzugsweise Steckverbindungen auf, so dass diese im Zugangsschacht auf einfache Weise über die Steckverbindungen miteinander verbunden werden können. Dies erlaubt eine schnelle und einfache Verlegung der Kabel und insbesondere wenn die Kabel Glasfaserkabel sind, kann auf ein Spleißen der Glasfaserkabel verzichtet werden. Die Steckverbindungen in den Zugangsschächten ermöglicht zudem eine unmittelbare Verlegung zum Hausanschluss und eine Aktivierung des verlegten Teilabschnitts möglich. Anders als bei bisherigen Systemen ist es nicht notwendig, erst vollständig die Kabel zu verlegen und diese erst nach Verlegung in Betrieb zu nehmen.

Ein Verfahren zur Verlegung von Kabeln mit dem Kabelkanalsystem umfasst daher:
(a) Ausheben eines Grabens mit einer Tiefe, in der der Kabelkanal verlaufen soll;
(b) Einbringen eines Zugangsschachts in den Graben;
(c) Einlegen von Wannen in den Graben, so dass eine erste Wanne mit der Anschlussöffnung im Zugangsschacht oder mit einer am Zugangsschacht ausgebildeten Anschlusswanne verbunden wird und mindestens zwei Wannen zu einem Kanal verbunden werden;
(d) Einlegen mindestens eines Kabels in den Kanal;
(e) Verschließen der Wannen mit den Deckeln;
(f) Verfüllen des Grabens.

Für die Verlegung des Kabelkanalsystems in einem Gehweg oder in einer Straße, insbesondere in einem Gehweg wird zunächst die Decke, beispielsweise Asphalt oder Pflastersteine, entfernt. Nach dem Entfernen der Decke wird der Graben so tief ausgehoben, dass der Boden des Grabens auf Höhe der Unterkante der Anschlussöffnung im Zugangsschacht oder des Bodens der am Zugangsschacht ausgebildeten Anschlusswanne liegt. Die Tiefe des Grabens beträgt dabei vorzugsweise 10 bis 60 cm, insbesondere 15 bis 30 cm ab Oberkante der Decke des Gehwegs oder der Straße. Durch diese Mindertiefenverlegung wird der Materialeinsatz bei der Verlegung reduziert und die Bauzeit und die Installationszeit können beschleunigt werden, wodurch auch Kosten reduziert werden können. Aufgrund des geringen Geräteeinsatzes, der reduzierten Bauzeit und des damit verbundenen geringeren Personalaufwands werden auch Lärmemissionen und Kohlenstoffdioxid-Emissionen reduziert. Insbesondere der Wegfall schweren Baugeräts führt zu einer deutlichen Reduzierung der Kohlenstoffdioxid-Emissionen um bis zu 99 % im Vergleich zu einer herkömmlichen Verlegung von Rohren.

Ein weiterer Vorteil der Mindertiefenverlegung ist, dass die Verkehrsbelastung reduziert wird, da sich die Arbeiten auf Gehwege und Randbereiche beschränken und damit keine großflächigen Absperrungen erforderlich sind. Der Verkehrsfluss bleibt somit weitgehend unbeeinträchtigt.

Durch die Verlegung in der geringen Tiefe wird auch das Risiko minimiert, bestehende Versorgungsleitungen oder andere unterirdisch verlegte Infrastruktur zu beschädigen.

Insgesamt sind das Kabelkanalsystem und das Verfahren zur Verlegung gegenüber üblichen Tiefbauverfahren ressourcenschonend, da weniger Aushub anfällt, und der geringere Materialbedarf und die kürzeren Bauzeiten den Verbrauch von Energie, Baumaterialien und Arbeitskraft reduzieren.

Nach dem Ausheben des Grabens werden die Wannen in den Graben eingelegt, wobei eine erste Wanne mit der Anschlussöffnung im Zugangsschacht oder mit der am Zugangsschacht ausgebildeten Anschlusswanne verbunden wird und mindestens zwei Wannen zu einem Kanal verbunden werden. Sobald die Position für einen nachfolgenden Zugangsschacht erreicht ist, wird der Zugangsschacht in den Graben eingesetzt und die letzte Wanne des Kanals wird mit einer Anschlussöffnung des Zugangsschachts oder mit einer am Zugangsschacht ausgebildeten Anschlusswanne verbunden.

Um die Kabel vor Feuchtigkeit zu schützen, ist es möglich, Bodenstege in den Wannen vorzusehen, auf die die zu verlegenden Kabel gelegt werden können. Abhängig von der Produktionsmethode der Wannen ist es jedoch auch möglich, auf die Bodenstege zu verzichten.

Weiterhin weisen die Wannen vorzugsweise Drainageöffnungen in ihrem Boden auf, durch die möglicherweise eindringendes Wasser ablaufen kann. Die Bodenstege, auf denen die Kabel verlaufen, sind vorzugsweise quer zur Verlegerichtung der Kabel ausgerichtet. Zur Verstärkung der Wannen ist es weiterhin möglich, mindestens einen parallel zur Verlegerichtung der Kabel laufenden Steg am Boden der Wannen vorzusehen.

Die Verbindung der Wannen kann beispielsweise über Nut- und Federverbindungen an den Wannen erfolgen oder durch Vorsehen einer Verbindungsstelle, die etwas aufgeweitet ist, so dass eine nachfolgende Wanne in de Verbindungsstelle eingelegt werden kann. Bevorzugt ist es jedoch, separate Verbindungsstücke vorzusehen, deren Querschnitt dem Querschnitt der Wannen entspricht und die außen über die Wannen gestülpt werden. Um eine flüssigkeitsdichte Verbindung zu erhalten, sind an den Verbindungsstellen jeweils Dichtelemente vorgesehen, beispielsweise Dichtschnüre oder Flach- oder Flüssigdichtungen. Darüber hinaus können je nach Anforderung folgende bitumenhaltige oder sonstige abdichtende Materialien zum Einsatz kommen, zum Beispiel selbstklebende oder thermisch aktivierbare Bitumendichtbänder, gegebenenfalls eine bituminöse Beschichtung aufweisende Butylkautschuk-Dichtbänder, Dichtungsprofile oder Dichtschnüre auf Bitumen- oder Polymer-Basis, Flachdichtungen mit Bitumen-Beschichtung oder -einlage, Kalt- und Heiß-Bitumenmassen zum Aufstreichen oder Einpressen, Bitumen-Kautschuk-Pasten, reaktive Bitumenemulsionen oder Zwei-Komponenten-Bitumendichtstoffe, Fugenvergussbänder mit bituminösem Kern, gegebenenfalls bitumenmodifizierte selbstquellende Dichtbänder sowie kombinierte Dichtungssysteme mit Gewebeeinlage oder Vliesträgereinlage.

Bei Verwendung von Verbindungsstücken sind die Dichtelemente vorzugsweise in den Verbindungsstücken angeordnet.

Um eine feste Verbindung der Wannen mit den Verbindungsstücken zu erhalten, sind die Verbindungsstücke vorzugsweise mit einer Klickverbindung mit den Wannen verbunden. Alternativ oder zusätzlich ist es auch möglich, die Wannen mit Nieten, insbesondere mit Kunststoffnieten zu verbinden, um Übergänge zu stabilisieren und langfristig dicht zu halten. auch die Verbindung einer Wanne mit einem Zugangsschacht kann zusätzlich oder alternativ durch den Einsatz von Nieten stabilisiert werden.

Sobald die Wannen für ein Kanalstück zwischen zwei Zugangsschächten verlegt sind, werden die zu verlegenden Kabel, insbesondere Glasfaserkabel, in die Wannen eingelegt. Hierbei erfolgt die Verlegung von Zugangsschacht bis Zugangsschacht, so dass die Enden des Kabels, die jeweils mit einem Steckverbinder ausgestattet sind, in den Zugangsschächten liegen und im Kabelkanal keine weiteren Verbindungen enthalten sind. Auf diese Weise können die Kabel auf einfache Weise abschnittsweise verlegt werden. Weiterhin ist es auch leicht möglich, Kabel zu tauschen, indem die Steckverbindungen im Zugangsschacht gelöst werden und ein neues Kabel von Zugangsschacht zu Zugangsschacht durch den Kabelkanal gezogen wird. Anschließend kann das neue Kabel wieder mit den Steckverbindungen angeschlossen werden.

Nach der Erstverlegung der Kabel in den Wannen werden die Wannen mit Deckeln verschlossen. Hierbei weisen die Deckel zur Erhöhung der Stabilität vorzugsweise Stabilisierungsstege auf. Die Stabilisierungsstege können dabei zum Beispiel parallel, diagonal oder quer zur Verlegerichtung der Kabel verlaufen, wobei abhängig vom Herstellverfahren der Deckel parallel zur Verlegerichtung der Kabel verlaufende Stabilisierungsstege bevorzugt sind. Wenn die Stabilisierungsstege diagonal zur Verlegerichtung der Kabel verlaufen, weisen diese vorzugsweise einen Winkel von 45° zur Seitenwand des Kabelkanals auf. Weiterhin ist es bei diagonal verlaufenden Stabilisierungsstegen vorteilhaft, wenn diese kreuzförmig angeordnet sind.

Sobald die Wannen mit den Deckeln verschlossen sind, wird der Graben wieder aufgefüllt und anschließend der Bodenbelag wiederhergestellt, indem beispielsweise die Pflastersteine wieder eingesetzt werden oder, bei einer Asphaltoberfläche, indem der verfüllte Graben mit frischem Asphalt verschlossen wird.

Um eine stabile Verbindung der einzelnen Elemente des Kabelkanals zu erhalten ist es bevorzugt, wenn die Deckel versetzt zu den Wannen aufgesetzt werden, so dass die Deckel jeweils die Verbindungsstellen der Wannen überdecken. Für eine dichte Verbindung können die Deckel so gestaltet sein, dass diese überlappend auf die Wannen aufgesetzt werden können. Zur Abdichtung befinden sich vorzugsweise Dichtelemente in den sich überlappenden Bereichen der Deckel. Alternativ und bevorzugt ist es jedoch, Abdeckprofile vorzusehen, die die Stoßstellen der Deckel überdecken. Auch hier ist es weiterhin bevorzugt, wenn die Abdeckprofile mit Dichtelementen, beispielsweise Dichtschnüren oder Flachdichtungen, ausgestattet sind, um eine flüssigkeitsdichte Verbindung der Deckel zu erhalten.

Um die Deckel fest mit den Wannen zu verbinden, ist es weiterhin bevorzugt, wenn die Deckel Seitenwandungen aufweisen und die Seitenwandungen der Deckel in die Seitenwandungen der Wannen eingreifen, beispielsweise über eine Klickverbindung. Hierzu ist es zum Beispiel möglich, die Seitenwandungen der Wannen und der Deckel jeweils mit Rastnasen zu versehen, die nach Verschließen der Wannen mit den Deckeln ineinandergreifen. Bevorzugt erstrecken sich die Rastnasen dabei über die gesamte Länge der Wannen und Deckel. Weiterhin ist für einen dichten Verschluss der Wannen bevorzugt, wenn zwischen Wannen und Deckeln Dichtelemente, insbesondere Dichtschnüre oder Flachdichtungen, vorgesehen sind, mit denen der Kabelkanal nach Verschließen der Wannen mit den Deckeln abgedichtet wird. Neben Dichtschnüren oder Flachdichtungen können auch Flüssigdichtungen, die auf die Deckel und/oder die Wanne aufgestrichen werden, verwendet werden.

Das versetzte Aufbringen der Deckel auf die Wandungen und die optional eingesetzten Kunststoffnieten führen zu einer durchgehenden Stabilität über die gesamte Länge des Kabelkanals. Insbesondere kann hierdurch ein Auseinanderdriften der einzelnen Elemente verhindert werden. Weiterhin entsteht auf diese Weise ein dauerhaft stabiler und belastbarer Kanalstrang, der sich für Gehwege, Einfahrten und andere Bereiche mit wechselnder Verkehrslast eignet.

Da insbesondere über die Zugangsschächte, deren Schachtdeckel an der Oberfläche liegt, Feuchtigkeit eindringen kann, ist es bevorzugt, wenn auch die Zugangsschächte mit Drainageöffnungen im Boden ausgestattet sind. Zudem weisen auch die Zugangsschächte vorzugsweise Stabilisierungsstege auf, um wechselnden Belastungen standzuhalten.

Um die Zugangsschächte sicher zu verschließen, ist es vorteilhaft, wenn der Schachtdeckel für den Zugangsschacht mit dem Zugangsschacht kraftschlüssig verbunden werden kann. Hierzu ist es zum Beispiel möglich, den Schachtdeckel mit dem Zugangsschacht zu verschrauben. Zur Verschraubung können am Zugangsschacht Laschen ausgebildet sein, in die Schrauben, die durch entsprechende Löcher im Schachtdeckel geführt werden, eingeschraubt werden. Hierbei können in den Laschen bereits Gewinde ausgebildet sein oder die Gewinde werden beim Einschrauben der Schrauben gebildet. Um die Schachtdeckel wieder öffnen zu können ist es dann notwendig, zunächst die Schrauben zu entfernen. Ein versehentliches Öffnen der Zugangsschächte wird auf diese Weise verhindert.

Um die Kabel im Kabelkanal sauber zu führen, ist es weiterhin möglich, Führungselemente, beispielsweise Führungsstäbe zur Fixierung oder getrennten Führung der Kabel in einem Teil der Drainageöffnungen aufzunehmen. Auch zur Fixierung der einzelnen Elemente eingesetzte Kunststoffnieten können durch die Drainageöffnungen geführt werden. Wenn Führungselemente oder Kunststoffnieten in Drainageöffnungen aufgenommen sind, ist es erforderlich, die Anzahl der Drainageöffnungen so groß zu wählen, dass auch noch freie Drainageöffnungen verbleiben, durch die Wasser ablaufen kann.

Um das Ablaufen des Wassers durch die Drainageöffnungen zu erleichtern, ist es vorteilhaft, wenn die Auflage, auf der die Wannen und die Zugangsschächte aufliegen, wasserdurchlässig ist und beispielsweise ein grobkörniges Material wie grobkörnigen Sand oder Kies, umfasst.

Die Wannen, Deckel, Zugangsschächte und Schachtdeckel können aus jedem beliebigen geeigneten Material gefertigt werden. Bevorzugt als Material für Wannen, Deckel, Zugangsschächte und Schachtdeckel sind Metalle oder Kunststoffe, insbesondere verstärkte Kunststoffe. Wenn ein Metall als Material für Wannen, Deckel und Zugangsschächte vorgesehen ist, ist es bevorzugt, ein korrosionsbeständiges Metall zu verwenden, beispielsweise Edelstahl oder Aluminium, insbesondere eloxiertes Aluminium, das eine schützende Oxidschicht aufweist.

Bevorzugt ist jedoch die Fertigung von Wannen, Deckeln, Zugangsschächten und Schachtdeckeln aus Kunststoff, insbesondere faserverstärktem Kunststoff. Als Kunststoffe eignen sich thermoplastische Kunststoffe oder duroplastische Kunststoffe. Geeignete thermoplastische Kunststoffe sind zum Beispiel Polyethylen, insbesondere Polyethylen hoher Dichte (PE-HD), Polypropylen (PP), Acrylnitril-Butadien-Styrol-Copolymere (ABS), Polyamide (PA) oder Polycarbonate (PC). Geeignete duroplastische Kunststoffe sind beispielsweise Epoxidharze (EP), Polyurethane (PU) oder Polyesterharze (UP).

Besonders bevorzugt ist die Verwendung von faserverstärkten Kunststoffen, um die mechanischen Eigenschaften zu verbessern. Als Verstärkungsfasern eignen sich insbesondere Glasfasern, Kohlenstofffasern, Aramidfasern, beispielsweise Kevlar^{®}, Metallfasern, insbesondere Stahlfasern oder Naturfasern, beispielsweise Hanf- oder Flachsfasern.

Der Kabelkanal kann jede beliebige Querschnittsform aufweisen, beispielsweise dreieckig, rechteckig, halbkreisförmig, kreisförmig oder in Form eines Polygons mit fünf oder mehr Ecken. Bevorzugt ist jedoch eine rechteckige Querschnittsform, wobei sowohl die Wannen als auch die Deckel jeweils u-förmig gestaltet sind und die Wannen eine höhere Seitenwandung aufweisen als die Deckel.

Für gerade Strecken zwischen zwei Zugangsschächten sind die Wannen in Verlegerichtung der Kabel gerade ausgeführt, so dass diese eine rechteckige Form haben. Um den Kabelkanal entlang von Kurven zu führen, ist es möglich, die Enden der Wannen schräg auszuführen, so dass diese eine trapezförmige Form haben. Weiterhin ist es auch möglich, die Wannen mit einem Radius auszuführen oder mit einem Knick. Wenn die Wannen mit einem Radius oder einem Knick ausgeführt sind, ist es bevorzugt, wenn die die Enden der Wanne in einem rechten Winkel schneidenden Achsen einen Winkel im Bereich von 90° bis 170° aufweisen, beispielsweise einen Winkel von 90°, einen Winkel von 120°, einen Winkel von 135°, einen Winkel von 165° oder einen Winkel von 170°. Jedoch ist auch jeder andere geeignete Winkel möglich. Auch ist es möglich, neben Wannen mit einer rechteckigen Form oder Wannen mit einem Radius oder Knick, Wannen vorzusehen, die wie ein Balgen geformt sind und sich auf diese Weise beliebig formen lassen. Dies erlaubt beispielsweise neben dem Verlegen von Kurven auch einen einfachen Höhenausgleich. Um die wie ein Balgen geformten Wannen zu verschließen, sind vorzugsweise auch die Deckel wie ein Balgen geformt. Die Deckel zum Verschließen der Wannen mit rechteckiger Form sind ebenfalls rechteckig gestaltet. Da die Deckel vorzugsweise versetzt zu den Wannen aufgesetzt werden, kann entweder ein als Balgen geformter Deckel teilweise auf eine Wanne mit rechteckiger Form aufgesetzt werden oder es werden Deckel bereitgestellt, bei denen nur ein Teil, vorzugsweise die Hälfte, in Form eines Balgens gestaltet ist.

Die Länge der einzelnen Wannen und Deckel kann bis zu mehrere Meter betragen. Vorzugsweise liegt die Länge in einem Bereich von 0,5 m bis 10 m, insbesondere in einem Bereich von 1 m bis 5 m, Insbesondere bei Verwendung von Verbindungsstücken zur Verbindung der einzelnen Wannen ist es möglich, längere Wannen vor Ort auf eine gewünschte Länge zu kürzen.

Um Straßenquerungen zu minimieren und bei der Verlegung der Kabelkanäle und der Kabel den Einfluss auf den laufenden Verkehr zu minimieren, ist es bevorzugt, die Kabelkanäle entlang von Gehwegen zu verlegen. Hierbei ist es weiterhin bevorzugt, wenn die Zugangsschächte jeweils an Positionen angeordnet sind, an denen die Verbindungsleitungen zu Gebäuden abzweigen. Die Verbindungsleitungen werden ebenfalls mit Steckverbindungen an die Kabel angeschlossen.

Um die Kabel in unterschiedlichen Tiefen zu verlegen, beispielsweise in geringer Tiefe entlang von Gehwegen und in größerer Tiefe bei Straßenquerungen oder wenn die Kabel unter anderen Hindernissen hindurchgeführt werden sollen, beispielsweise Fundamente von Bordsteinen oder ähnlichem ist es bevorzugt, Absenkschächte vorzusehen. Der Absenkschacht ist dabei so gestaltet, dass dieser an mindestens zwei Wandungen, bevorzugt an gegenüberliegenden Wandungen, Anschlussöffnungen in unterschiedlichen Höhen aufweist. Die Anschlussöffnungen können mit Anschlusswannen versehen sein, wobei in diesem Fall die Anschlussöffnung in einer Wandung auf einer ersten Höhe und die Anschlussöffnung in der zweiten Wandung in einer zweiten Höhe angeordnet ist. Bevorzugt ist es jedoch, den Absenkschacht mit mindestens zwei in unterschiedlicher Höhe angeordneten Anschlussöffnungen in jeder Wandung, in der Anschlussöffnungen vorgesehen sind, zu gestalten und die Anschlussöffnungen, die nicht benötigt werden, zu verschließen. Hierbei ist es weiterhin bevorzugt, wenn die oberen Anschlussöffnungen in einer Höhe ausgeführt sind, bei der nach Verschließen des Absenkschachts mit einem Deckel der Deckel des Absenkschachts und der Deckel der an den Absenkschacht angeschlossenen Wanne bündig aneinander anschließen.

Um das erfindungsgemäße Kabelkanalsystem an ein bereits vorhandenes System, bei dem die Kabel in einer größeren Tiefe verlegt wurde, üblicherweise in einer Tiefe von 30 bis 60 cm, anzuschließen, können Anschlussschächte verwendet werden, die mindestens einen Anschluss in einer Tiefe aufweisen, in der die Kabel des bereits vorhandenen Systems verlegt wurden und mindestens einen Anschluss, an die Wannen des Kabelkanalsystems angeschlossen werden können, die in einer geringeren Höhe verlaufen. Da bei bisherigen Systemen üblicherweise Rohre mit einem kreisförmigen Querschnitt eingesetzt wurden, ist es weiterhin bevorzugt, wenn der mindestens eine Anschluss für den Anschluss an das bereits vorhandene System ebenfalls einen kreisförmigen Querschnitt aufweist. Wenn vorgesehen ist, dass mit dem erfindungsgemäßen Kabelkanalsystem ein Abzweig aus dem bereits vorhandenen System realisiert werden soll, weist der Anschlussschacht zur Verbindung mit einem bereits vorhandenen System vorzugsweise zwei Anschlüsse auf, die mit dem bereits vorhandenen System verbunden werden können. Auf diese Weise können Kabel aus dem bereits vorhandenen System durch den einen Anschluss in den Anschlussschacht geführt werden und durch den zweiten Anschluss wieder aus diesem heraus in das bereits vorhandene System. Wenn vorgesehen ist, dass der Anschlussschacht am Ende eines bereits vorhandenen Systems, das in größerer Tiefe verlegt wurde, angebunden werden soll, um weitere Gebäude mit dem erfindungsgemäßen Kabelkanalsystem zu verbinden, ist ein Anschluss zur Verbindung mit dem bereits vorhandenen Kabelkanalsystem ausreichend.

Abhängig davon, in wie viele Richtungen Kabel mit dem erfindungsgemäßen Kabelkanalsystem geführt werden sollen, kann der Anschlussschacht bis zu vier Anschlüsse aufweisen, an die die Wannen des Kabelkanalsystems angeschlossen werden können.

Das Material, aus dem die Anschlussschächte gefertigt werden, ist dabei vorzugsweise das gleiche Material wie das, aus dem die Zugangsschächte gefertigt werden.

Durch die Verwendung von Steckverbindern und der Verlegung der Kabel von Zugangsschacht zu Zugangsschacht ist es möglich, die an das verlegte Kabel angeschlossenen Einheiten direkt in Betrieb zu nehmen. Es ist nicht erforderlich, auf die Fertigstellung eines gesamten Netzabschnitts zu warten. Auch ist durch die Verwendung von Steckverbindungen eine schnelle und einfache Verlegung möglich, so dass der Personal- und Zeitaufwand im Vergleich zu herkömmlichen Verlegearten deutlich reduziert ist.

Die Zugangsschächte können als Kontrollschächte ausgebildet sein, die zwei AnschlussÖffnungen oder Anschlusswannen aufweisen und durch die die Kabel durchgeführt werden. An Stellen, an denen ein Anschluss an ein Gebäude vorgesehen ist, weisen die Zugangsschächte vorzugsweise drei oder mehr Anschlussöffnungen oder Anschlusswannen auf. Im Zugangsschacht ist eine Steckverbindung vorgesehen, mit der eine Abzweigung aus einem in dem Kabelkanal verlaufenden Trassenkabel in das Gebäude realisiert wird. Insbesondere bei sich gegenüberliegenden zu versorgenden Gebäuden ist es vorteilhaft, vier Anschlussöffnungen oder Anschlusswannen vorzusehen, so dass durch zwei gegenüberliegende Öffnungen das Trassenkabel geführt werden kann und durch die anderen beiden Öffnungen die Anschlussleitungen in die Gebäude.

Neben dem Einsatz von Zugangsschächten mit drei oder mehr Anschlussöffnungen können zur Realisierung von Abzweigungen auch Kreuzungsstücke oder T-Stücke vorgesehen sein. Diese sind vorzugsweise so gestaltet, dass an einer Position, an der ein Kabel abzweigen soll, eine Öffnung in der Wanne ausgebildet ist und an der Öffnung eine Anschlusswanne angeordnet ist. Um zum Verschließen der Kreuzungsstücke oder T-Stücke keine zusätzlichen Deckel einsetzen zu müssen, ist es bevorzugt, die Öffnung in der Wandung so auszuführen, dass ein durchgehender Deckel aufgesetzt werden kann. Wenn die Deckel in Nuten in der Wandung vorgesehen sind, in die am Deckel ausgebildete Federn eingreifen, befindet sich die Öffnung vorzugsweise unterhalb der Nut. Die Wandungen der Anschlusswandungen schließen in dem Bereich, in dem der Deckel aufgesetzt wird, vorzugsweise nicht bündig mit der Wandung der Wanne ab, sondern weisen einen Ausschnitt auf, in den der Deckel eingesetzt werden kann.

Um die Kabel im T-Stück mit einem ausreichend großen Biegeradius um die Biegung des T-Stücks führen zu können und auf diese Weise Schäden am Kabel zu verhindern, ist es weiterhin bevorzugt, wenn die Abzweigung am T-Stück mit einem Radius an der Wanne angeschlossen ist oder sich zur Wanne hin konisch aufweitet, bevorzugt mit einem Winkel zur Achse der Anschlusswanne in einem Bereich von 30 bis 60°. Hierbei ist es weiterhin bevorzugt, wenn die Aufweitung eine Höhe aufweist, die unterhalb der Höhe endet, an der ein aufgesetzter Deckel endet, und nach oben verschlossen ist.

Neben unterschiedlichen Bauformen für den Zugangsschacht, den Anschlussschacht oder den Kontrollschacht, ist es auch möglich, einen Universalschacht zu nutzen, der an mehreren Positionen Anschlussöffnungen aufweist. Diese sind vorzugsweise in jeder der Wandungen des Universalschachts ausgeführt, wobei es weiterhin bevorzugt ist, wenn in jeder Wandung des Universalschachts Anschlussöffnungen in unterschiedlichen Höhen vorgesehen sind.

In einer Ausführungsform der Erfindung können die Anschlussöffnungen als Löcher in der Wandung vorgesehen sein, wobei in diesem Fall bevorzugt Adapter vorgesehen sind, die in die Anschlussöffnungen eingesetzt werden können. Die Gestaltung der Anschlussöffnungen als Löcher, in die Adapter eingesetzt werden können, können für jeden Schachttyp vorgesehen sein, beispielsweise den Zugangsschacht, den Anschlussschacht, den Kontrollschacht oder insbesondere den Universalschacht.

Insbesondere wenn der Schacht mehr Anschlussöffnungen aufweist, als Anschlüsse am Schacht vorgesehen sind, beispielsweise beim Universalschacht oder beim Absenkschacht, ist es möglich, die Adapter so zu gestalten, dass die einzelnen Anschlussöffnungen mit den Adaptern verschlossen werden können. Hierzu ist es beispielsweise möglich, Adapter vorzusehen, die geschlossen sind und weitere Adapter, die Öffnungen aufweisen, in die die Wannen für die Kabelkanäle eingeschoben werden können. Bevorzugt ist es jedoch, die Adapter mit einem Deckel zu verschließen, der entfernt werden kann, wenn die entsprechende Anschlussöffnung, in die der Adapter eingesetzt ist, genutzt werden soll. Der Deckel kann dabei als separates Bauteil den Adapter verschließen oder es werden Adapter eingesetzt, bei denen der Deckel einstückig mit ausgeformt ist und mit einem geeigneten Werkzeug entfernt oder herausgebrochen werden kann. Wenn vorgesehen ist, den Deckel herauszubrechen, wird dieser vorzugsweise mit einer Sollbruchstelle, an der der Deckel beim herausbrechen abbricht, mit dem Adapter verbunden.

Um eine ordentliche Kabelführung zu erhalten ist es möglich, Kabelhalterungen vorzusehen, die in die einzelnen Bauteile eingesetzt sind. Die Kabelhalterungen können dabei im jeweiligen Bauteil fest integriert sein und einstückig mit dem Bauteil ausgebildet sein oder können als separate Bauteile vorgesehen sein, die in das Bauteil eingesetzt werden können. Hierzu ist es beispielsweise möglich, die Kabelhalterung als Stange auszuführen, in der Löcher ausgebildet sind, durch die die Kabel geführt werden können. Die Kabelhalterung kann dann mit geeigneten Mitteln im jeweiligen Bauteil befestigt werden. Insbesondere für die Nutzung in Schächten ist es bevorzugt, im Schacht gegenüberliegende Führungsnuten auszubilden, in die die Kabelhalterung eingeschoben werden kann.

Abhängig von der Art der Kabel, der Anzahl an Abzweigungen, der Länge der Trasse und dem Abstand der Gebäude, zu denen Kabel verlegt werden, ist es möglich, die Länge der Kabelabschnitte, die in dem Kabelkanal verlegt werden, auch so zu wählen, dass ein Kabel durch ein oder mehrere Zugangsschächte geführt wird und nicht in jedem Zugangsschacht eine Steckverbindung vorgesehen ist. Auf diese Weise können Leitungsverluste, die durch die Steckverbindungen verstärkt werden, reduziert werden.

Abhängig von der Art der Kabel, die durch den Kabelkanal verlegt werden, ist es möglich, Multifunktionsgehäuse für aktive Komponenten zu integrieren.

Das Kabelkanalsystem eignet sich insbesondere zur Verlegung von Glasfaserkabeln. Durch den Einsatz der Steckverbindungen können Spleißvorgänge weitgehend vermieden werden, wodurch Installationszeiten reduziert und Fehlerquellen minimiert werden. Zudem wird eine höhere Flexibilität bei der Erweiterung und Wartung erreicht.

Entlang der Hauptstrecken, der sogenannten Trassen, werden vorkonfektionierte Kabel in unterschiedlichen Aderzahlen, in der Regel 2 bis 96 Fasern, eingesetzt. Diese Kabel weisen an den Enden jeweils einen Stecker und einen Gegenstecker auf, so dass sie sich bei der Verlegung einfach aneinanderstecken lassen.

Die Aderzahlen können nach Projektbedarf variieren. So können zum Beispiel bei großflächigen Versorgungsnetzen Kabel mit 20 bis 100 Fasern, beispielsweise 48-, 72- oder 96-Faser-Kabel, zum Einsatz kommen, wohingegen bei kleineren Projekten auch 2- oder 4-Faser-Kabel ausreichend sein können.

Durch die Stecker an den Kabeln ist es auch möglich, zusätzliche Trassenkabel ohne komplexe Spleißarbeiten durch Anstecken anzubinden, da die Kabel jeweils vorkonfektioniert werden können und dann in vorkonfektioniertem Zustand mit bereits vorhandenen Steckern eingebaut werden.

Um einzelne Gebäude an das Trassenkabel anzuschließen, sind in der Regel Ein- oder Zweifaser-Abzweige möglich. Für den Anschluss werden vorzugsweise Stecker eingesetzt, mit denen eine Faser oder zwei Fasern aus dem Trassenkabelbündel herausgeführt werden, während der Rest der Fasern ohne Unterbrechung weiterläuft. Da nur ein Teil der Fasern abgezweigt wird, entfällt die Notwendigkeit, das Trassenkabel zu kappen und zu spleißen. Die abgezweigten Fasern können dann in einem Zugangsschacht mit drei oder mehr Anschlussöffnungen oder Anschlusswannen herausgeführt und mit dem Hauskabel verbunden werden.

Für eine geordnete Kabelführung ist es weiterhin vorteilhaft, wenn Sortierhalterungen eingesetzt werden, die ausschließlich der Verbindungs- und Verteilungsfunktion dienen. Diese verfügen über mehrere definierte Einlässe, vorzugsweise 6 bis 24, mehr bevorzugt 9 bis 18, beispielsweise 12, mit denen Kabel mechanisch verbunden werden können, beispielsweise mittels Push-Lock-, Klick- oder Schraubsystemen. Die Sortierhalterung gewährleistet, dass alle Anschlüsse auch unter schwierigen Bedingungen im Schacht gegen Wasser, Schmutz und Umwelteinflüsse geschützt sind und in der Luft gehalten werden. Gleichzeitig dienen die Sortierhalterungen auch der strukturierten Orientierung, Sortierung und Nachverfolgbarkeit der verlegten Kabel.

Das erfindungsgemäße Kabelkanalsystem erlaubt zudem eine einfache Erweiterung, da neue Hausanschlüsse auf einfache Weise realisiert werden können, indem an der gewünschten Stelle ein Abzweig-Stecker platziert wird. Hierdurch braucht nicht die gesamte Trasse unterbrochen werden.

Anders als die Endpunkte der einzelnen Kabelabschnitte, die sich jeweils in Zugangsschächten befinden, befinden sich die Endpunkte der Trassenkabel in Multifunktionsgehäusen oder in zentralen Verteilern. Auch Knotenpunkte befinden sich in Multifunktionsgehäusen oder zentralen Verteilern. In diesen können Kabelpeitschen oder Patchpanels zum Einsatz kommen und die Fasern können direkt auf aktive Technik oder weitere passive Komponenten aufgesteckt werden. Bevorzugt werden in den Multifunktionsgehäusen strukturierte Steckverbindungen, beispielsweise in Form eines Faser-Management-Systems, genutzt, wobei abhängig vom Ausbaugrad beispielsweise 48, 96 oder 144 Steckplätze zur Verfügung stehen können. Beim Einsatz für die Glasfaserverlegung werden die Glasfaserkabel vorzugsweise bereits werkseitig in definierter Reihenfolge angeschlossen, so dass das gesamte Multifunktionsgehäuse bereits im Werk vollständig vorkonfektioniert und durchverkabelt werden kann. So lässt sich exakt dokumentieren, welcher Anschluss mit welchem Gebäudeanschluss verbunden ist beziehungsweise verbunden werden soll.

Ein in einem Gebäude ankommendes Kabel wird vorzugsweise in einem Glasfaseranschlusspanel, einem sogenannten Patchpanel, oder einer Wandabschlussbox terminiert. Hierzu ist es lediglich erforderlich, die vorkonfektionierten Stecker in die passenden Ports zu stecken. Auch hierdurch entfallen Spleißarbeiten während der Verlegearbeiten weitgehend.

Vorteil des erfindungsgemäßen Verfahrens für die Verlegung von Glasfasern ist, dass vor Ort kein Spleißen erforderlich ist, sondern die einzelnen Kabel und Kabelabschnitte bereits bei Herstellung vorkonfektioniert und getestet werden können. Hierdurch werden sowohl der Personalaufwand bei der Verlegung als auch mögliche Fehlerquellen minimiert.

Durch die Steckerverbindungen in den Zugangsschächten sind weiterhin schnelle Reparaturen und Erweiterungen möglich. So kann beispielsweise bei einem Leitungsausfall nur das betroffene Kabel entnommen und ein neues Kabel eingesteckt werden, ohne dass aufwendige Spleißarbeiten anfallen. Auch lassen sich neue Anschlüsse oder Trassenabschnitte schnell integrieren und es ist eine schrittweise Erweiterung möglich, indem weitere Kabelbündel angeschlossen werden oder zusätzliche Abzweige hinzugefügt werden.

Da die Kabel bereits ab Herstellung vorkonfektioniert werden und eine Qualitätskontrolle ab Werk möglich ist, lassen sich die Kabelenden präzise schleifen, so dass nur geringe Dämpfungswerte zu erwarten sind. Hierdurch wird eine stabile Datenübertragung erreicht, die mit professionellen Spleißverbindungen vergleichbar ist.

Stecker, die zur Verbindung von Glasfaserkabeln genutzt werden können, sind zum Beispiel LC-, SC-, E2000- oder MPO-Stecker, wobei diese je nach Projektstandard in Duplex- oder Mehrfachausführung ausgeführt sein können. Um Schäden durch Staub, Feuchtigkeit oder Zugbelastungen zu vermeiden, sind die Steckverbindungen vorzugsweise mit robusten Gehäusen versehen, die für den Außenbereich tauglich sind. Da Steckerverbindungen üblicherweise mehrere Steck-Zyklen erlauben, treten im Fall von Wartungsarbeiten oder Upgrades keine Qualitätsverluste auf.

Um zu vermeiden, dass Leitungen aufwendig durch zahlreiche Straßenquerungen geführt werden, ist es bevorzugt, die Leitungen über Gehwege und Randbereiche so zu führen, dass diese ganze Häuserblocks umrunden. Hierdurch können Hauptverkehrsbereiche gemieden werden und brauchen nur gequert zu werden, wenn eine neue Insel oder ein neuer Block angeschlossen werden soll. Auf diese Weise reduziert sich die Anzahl der kosten- und genehmigungsintensiven Straßenquerungen erheblich, wodurch auch Planungs- und Bauaufwand spürbar gesenkt werden. Auch die Sicherheit für Baupersonal und Verkehrsteilnehmer wird erhöht, da großflächige Baustellen entfallen.

Für die Verteilung der Hausanschlüsse werden vorzugsweise Multifunktionsgehäuse und kleine Unterverteilungen direkt in den Gebäuden eingesetzt, wobei für Objekte mit bis zu 32 Einheiten eine passive Verteilung ausreichend ist, wohingegen ab 32 Einheiten eine aktive Komponente im Haus vorgesehen wird.

Für die Glasfaserverlegung kann ein Multifunktionsgehäuse ein aktives OLT-System (Optical Line Termination) für eine Vielzahl von Einheiten, beispielsweise bis zu 576 Einheiten, beherbergen. Die Anzahl der zur Verfügung stehenden Ports entspricht dabei der Anzahl der Einheiten. Ein dem Multifunktionsgehäuse übergeordnetes Haupt-Multifunktionsgehäuse wird üblicherweise vom Basisnetz, dem sogenannten "Backbone" gespeist und verteilt das Signal auf die Multifunktionsgehäuse oder auch direkt auf die jeweiligen Gebäude. Das Haupt-Multifunktionsgehäuse kann dabei bis zu 12 klassische Netzverteiler (NVT)-Bereiche ersetzen.

Die Multifunktionsgehäuse sind vorzugsweise so ausgeführt, dass aus diesen bis zu 24, insbesondere bis zu 12 Kabelbündel geführt werden können, die sich in verschiedene Richtungen verzweigen können. Jedes dieser Kabelbündel kann bis zu 96 Fasern umfassen, beispielsweise 12 bis 96 Fasern, mehr bevorzugt 48 bis 96 Fasern und insbesondere 96 Fasern, wovon je nach Anforderung mehrere Fasern je Hausanschluss abgezweigt werden, in der Regel 1 bis 4 Fasern je Hausanschluss, wobei 2 oder 4 Fasern je Hausanschluss bevorzugt sind. So können beispielsweise bei Einsatz von Faserbündeln mit bis zu 96 Fasern und zwei Fasern je Hausanschluss mit einem Bündel bis zu 48 Gebäude mit Grundanschlüssen versorgt werden. In den einzelnen Gebäuden wird pro Einheit mindestens eine Faser benötigt. Eine zweite Faser kann bei Bedarf, zum Beispiel für einen zusätzlichen Datenanschluss aktiviert werden. Dieser verbraucht keinen weiteren Port am Multifunktionsgehäuse.

Da auf große Verteiler, sogenannte POPs, klassische Netzverteiler und komplexe Spleißarbeiten verzichtet wird, wird die Handhabung deutlich übersichtlicher. Die Kabel, die vom Multifunktionsgehäuse in ein Gebäude geführt werden, sind vorzugsweise als vorkonfektionierte Bündelkabel konzipiert. Abzweigungen werden mit Adaptern realisiert, so dass nur die tatsächlich benötigten Fasern abgezweigt werden.

Üblicherweise genutzte Steckverbindungen für Glasfaserkabel können 12 oder 24 Fasern miteinander verbinden, wobei insbesondere Steckverbindungen für 12 Fasern genutzt werden. Neben Steckverbindungen für 12 oder 24 Fasern ist jedoch auch jede andere Anzahl an Fasern denkbar, wobei üblicherweise nicht mehr als 24 Fasern, bevorzugt nicht mehr als 16 Fasern und insbesondere nicht mehr als 12 Fasern mit einer Steckverbindung verbunden werden. Für ein Trassenkabelbündel werden mehrere Einheiten, die jeweils mit einem Stecker versehen sind, gebündelt, insbesondere mehrere Einheiten mit 6 bis 24 Fasern, mehr bevorzugt mit 8 bis 16 Fasern, insbesondere mit jeweils 12 Fasern. Für ein in der Regel genutztes Bündel mit 96 Fasern können somit beispielsweise acht Einheiten mit jeweils 12 Fasern, die an ihren Enden jeweils mit einer Steckverbindung versehen sind, gebündelt werden. Die einzelnen Einheiten des Faserbündels, die an ihren Enden mit Steckverbindungen versehen sind, umfassen vorzugsweise jeweils die gleiche Anzahl an Fasern.

Für einen Anschluss wird ein Bündel, beispielsweise ein Bündel mit 12 Fasern, entnommen, wobei mit diesem je nach Anzahl an Fasern, die in ein Gebäude verlegt werden, drei bis zwölf Gebäude versorgt werden können. Die Verteilung in die Gebäude erfolgt über ein Fanout-Kabel, wobei der Anschluss an das Kabelbündel mit einer Steckverbindung erfolgt, mit der die Anzahl der Fasern im Kabelbündel verbunden werden kann, vorzugsweise über eine Steckverbindung für 12 Fasern, und auf der Gegenseite vorzugsweise für den Außeneinsatz geeignete LC-Steckverbindungen für jeweils eine Faser oder für zwei Fasern, bevorzugt für eine Faser, genutzt werden.

Die übrigen, nicht abgezweigten Faserbündel werden mit Steckverbindungen mit dem nachfolgenden Kabelbündel weitergeführt.

Alternativ und bevorzugt wird insbesondere für die Glasfaserverlegung für die Zuordnung der Fasern ein Fasermanagement-System eingesetzt. Dieses lässt sich mit der Sortierhalterung verbinden. Das Fasermanagement-System ist vorzugsweise aus modularen Einheiten aufgebaut, wobei jede modulare Einheit jeweils einen Eingang und mehrere Ausgänge aufweist, wobei die Anzahl der Ausgänge so gewählt wird, dass jedem Ausgang zwei Fasern des Kabels zugeordnet werden. Wenn beispielsweise zwölffaserige Kabel eingesetzt werden weist die modulare Einheit entsprechend sechs Ausgänge auf. Die einzelnen modularen Einheiten können beispielsweise einzeln oder als Kombination aus zwei oder mehr, vorzugsweise bis zu vier modularen Einheiten auf die Sortierhalterung aufgesetzt werden.

In einem Schacht können je nach Bedarf eine oder mehrere, vorzugsweise bis zu sechs Sortierhalterungen mit dem zugeordneten Fasermanagement-System aufgenommen sein, wobei bei Bedarf auch eine Erweiterung möglich ist. Vorzugsweise ist jeder Ausgang der einzelnen modularen Einheiten genau einem vordefinierten Adresspunkt zugeordnet und ein an den Ausgang angeschlossenes Anschlusskabel mit zwei Fasern wird direkt zum Gebäudeanschluss weitergeführt.

Die Verbindungen am Fasermanagement-System können über Steckverbindungen, Push-Lock-Verbindungen oder Schraubverbindungen realisiert werden. Die einzelnen Konnektoren für die Verbindungen weisen vorzugsweise einen integrierten Lichtindikator auf, der sichtbar aufleuchtet, sobald ein optisches Signal am Port des Fasermanagement-Systems ausgelöst wird, beispielsweise durch einfachen Knopfdruck. Auf diese Weise kann von außen ohne Umwege, Verwechslungen oder zusätzliche Prüftechnik direkt erkannt werden, welcher Anschluss aktiv ist. So kann eine korrekte Verbindung schnell, fehlerfrei und ohne aufwändige manuelle Zuordnung sichergestellt werden.

Bevorzugt umfasst das Fasermanagement-System eine Fasermanagement-Sockelleiste, die eine aktive Komponente und vorzugsweise eine integrierte SIM-Karte oder eSIM-Karte umfasst, so dass sie als Internet-of-Things (loT)-Gerät fungiert, das über Schnittstellen mit einer Verwaltungssoftware, insbesondere dem entsprechenden Modul der nachfolgend beschriebenen Planungssoftware, kommuniziert.

Für eine einfache und fehlerfreie Montage ist es bevorzugt, wenn die Kabel, insbesondere Glasfaserkabel, bereits werkseitig in definierter Reihenfolge an die Fasermanagement-Sockelleiste angeschlossen, wobei weiter bevorzugt ist, das gesamte Multifunktionsgehäuse bereits im Werk vollständig vorzukonfektionieren und durchzuverkabeln. Auf diese Weise lässt sich exakt dokumentieren, welcher Port des des Fasermanagement-Systems im Multifunktionsgehäuse mit welchem Hausanschluss verbunden werden soll, beziehungsweise nach vollständiger Montage mit welchem Hausanschluss verbunden ist.

Neben ihrer primären Funktion als Patchpanel verfügt die Fasermanagement-Sockelleiste vorzugsweise über mindestens eine der aktiven Komponenten ausgewählt aus einer aktiven Komponente zur Erkennung und Meldung der Belegung einzelner Ports, einer aktiven Komponente zur Aussendung eines Lichtsignals über ein angeschlossenes Kabel pro Port, einer aktiven Komponente zur Durchführung von Faser-OTR-Tests pro Faser und einer aktiven Komponente zur softwaregestützten Abfrage sowie für proaktive Statusberichte. Besonders bevorzugt verfügt die Fasermanagement-Sockelleiste über alle diese aktiven Komponenten. Die aktive Komponente zur Aussendung des Lichtsignals wirkt insbesondere mit den vorstehend beschriebenen Konnektoren zusammen, die einen integrierten Lichtindikator aufweisen.

Wenn ein Gebäude mehrere Einheiten umfasst, können im Inneren passive Splitter eingesetzt werden, beispielsweise mit Splitting-Raten von 1:2, 1:4, 1:8, 1:16 oder 1:32. Die passiven Splitter können in einer kleinen Unterverteilung oder, bei größeren Objekten, in einem separaten Technikraum installiert werden und erlauben eine effiziente Verteilung auf mehrere Einheiten.

Für die Planung der Trassen umfasst das Verfahren vorzugsweise:
(i) gegebenenfalls Durchführung einer Projektvorkalkulation zur Bestimmung einer ersten Kostenschätzung für Bau, Material und Personal in einem vorgegebenen Gebiet;
(ii) Durchführung einer Projektplanung mit Festlegung eines Trassenverlaufs entlang von Gehwegen mit minimaler Anzahl an Straßenquerungen sowie des benötigten Material- und Personalbedarfs;
(iii) Durchführen des Verfahrens gemäß Anspruch 1, wobei während des Einlegens der Wannen (1) und der Kabel (51) das die tatsächlich eingesetzte Materialmenge an die Projektplanung übertragen wird;
(iv) Neufestlegung des benötigten Materialbedarfs anhand der tatsächlich eingesetzten Materialmenge;
(v) Dokumentation des Baus des Kabelkanalsystems und der Verlegung der Kabel.

Die Projektkalkulation, die Durchführung der Projektplanung, die Neufestlegung des benötigten Materialbedarfs und die Dokumentation erfolgt vorzugsweise computerprogrammgesteuert, wobei die tatsächlich eingesetzte Materialmenge mittels eines mobilen Endgeräts erfasst wird.

Für eine effiziente Verlegung des Kabelkanalsystems und der Kabel wird hierzu vorzugsweise eine Planungssoftware eingesetzt, die ein Projektvorkalkulationsmodul, ein Projektplanungsmodul, ein Modul für Abnahme und Kollaboration, eine Operationsanwendung, ein Dokumentationsmodul und ein Modul für Service- und Wartungsplanung umfasst. Hierdurch deckt die Software sämtliche Schritte von der initialen Projektvorkalkulation über die Planungs- und Bauphase bis hin zur fortlaufenden Dokumentation und Wartung ab. Auf diese Weise kann ein nahtloser Informationsfluss zwischen allen Beteiligten, von Bauleitern und Planern bis hin zu Behörden und Eigentümern der Gebäude realisiert werden. Das Ergebnis ist ein effizienter, sicherer und transparenter Ausbauprozess, der die Verlegung des erfindungsgemäßen Kabelkanalsystems optimal unterstützt.

Mit dem Projektvorkalkulationsmodul können abhängig vom Umfang und der Bebauungsdichte eines zu versorgenden Gebiets unterschiedliche Trassenvarianten testen, um die wirtschaftlichste Lösung zu finden. Hierzu werden für die einzelnen Trassenvarianten jeweils die benötigten Kabellängen und die Anzahl der benötigten Verbindungsstellen der einzelnen Kabel bestimmt. Dies erlaubt auch eine schnelle Aufwandschätzung für das gewünschte zu versorgende Gebiet. Das zu versorgende Gebiet lässt sich beispielsweise anhand von Adresslisten oder durch Festlegung eines Umkreises bestimmen. Anhand der Bebauungsdichte lassen sich für die einzelnen Trassenvarianten auch erste Kostenschätzungen für Bau, Material und Personal treffen. Auf diese Weise kann dann die sinnvollste Trassenvariante für die Versorgung des Gebiets ermittelt werden.

Mit dem Projektplanungsmodul erfolgt dann eine automatische Trassenfindung, entlang der die tatsächliche Verlegung der Kabel erfolgt. Die Trasse wird dabei vorzugsweise so gewählt, dass Gehwege bevorzugt und Straßenquerungen minimiert werden. Hierzu werden Geodaten, die Position der einzelnen Häuserblöcke und die gewünschten Standorte der Multifunktionsgehäuse als Basis vorgegeben.

Weiterhin ermittelt das Projektplanungsmodul das für den Bau der Kabelkanäle und die Verlegung der Kabel benötigte Material, insbesondere die benötigte Anzahl der Wannen, Deckel, Zugangsschächte, Schachtdeckel und Multifunktionsgehäuse, die benötigten Kabelbündel und Versorgungskabel und die Anzahl der benötigten Steckverbinder. Insbesondere die Planung des benötigten Materials erfolgt vorzugsweise in Echtzeit. Anhand der geplanten Trasse und des benötigten Materials sowie der Anzahl der Gebäudeanschlüsse in dem zu versorgenden Gebiet lässt sich mit dem Projektplanungsmodul die Bauzeit und der Personalbedarf bestimmen.

Abschließend erlaubt das Projektplanungsmodul auch eine manuelle Feinjustierung durch Projektplaner. Diese ist insbesondere dann erforderlich, wenn einzelne Streckenabschnitte verfeinert werden müssen, zum Beispiel wenn Hauseingänge nicht an der vorgesehenen Position liegen und daher geändert werden müssen oder auch aufgrund möglicher behördlicher Auflagen.

Das Modul für Abnahme und Kollaboration wird für digitale Freigabeprozesse und eine Versions- und Revisionsverwaltung genutzt. Für die digitalen Freigabeprozesse kann die vom Projektplanungsmodul ermittelte Planung an interne oder externe Stakeholder freigegeben werden. Diese können dann beispielsweise Änderungswünsche direkt im System kommentieren. Mit der Versions- und Revisionsverwaltung werden alle Anpassungen dokumentiert, so dass frühere Planungsstände und auch die durchgeführten Planungsänderungen jederzeit nachvollziehbar sind. Hierbei ist es insbesondere auch bevorzugt, wenn für Kommunen ein eigener Zugang bereitgestellt wird, über den die Möglichkeit gegeben ist, High-Level-Designs, Planunterlagen und Antragsdokumente digital und in Echtzeit einzusehen, um den gesamten Genehmigungsprozess effizienter zu gestalten. So lassen sich beispielsweise Änderungsvorschläge, Teilgenehmigungen oder vollständige Freigaben direkt im System erteilen und kommunale Hinweise, beispielsweise zur Versetzung von Multifunktionsgehäusen oder Trassenanpassungen, können direkt im System als Auflagen erfasst und dokumentiert werden. Jede Überarbeitung des Genehmigungsprozesses wird versioniert, historisch nachvollziehbar gespeichert und revisionssicher abgelegt. Weiterhin ist es bevorzugt, wenn Schnittstellen den Kommunen ermöglichen, Netz- und Planungsdaten für die eigene Weiterverwendung herunterzuladen. Um den Prozess rechtssicher zu gestalten ist vorzugsweise eine zertifizierte digitale Signatur- und Stempelfunktion umfasst.

Weiterhin ist es vorteilhaft, wenn eine virtuelle Abstimmung direkt am Bauort ermöglicht wird. Hierzu ist vorzugsweise die Möglichkeit umfasst, Video-Konferenzen durchzuführen, bei der sich Projektbeteiligte visuell an realen oder geplanten Trassenpunkten innerhalb einer Gemeinde abstimmen können, ohne physisch vor Ort sein zu müssen. Hierzu werden insbesondere aktuelle Satellitenbilder als geografische Planungsgrundlage genutzt und Live-Videoübertragungen durch Smartphones, Tablets oder Datenbrillen vorgesehen. Weiterhin wird vorteilhafterweise vorgesehen, AR/VR-unterstützte Begehungen von Trassen oder Kreuzungspunkten in 3D zu ermöglichen. Durch die visuelle Rückmeldung wird dabei allen Beteiligten das Gefühl gegeben, real vor Ort zu sein. Die Einbindung der virtuellen Abstimmung in die Planungssoftware erlaubt weiterhin, Kommentare, Vorschläge und Entscheidungen direkt im System zu verarbeiten und zu dokumentieren.

Mit der Operationsanwendung erfolgt eine Aufmaßerfassung und es können Hausbesichtigungen und Protokolle dokumentiert werden. Für die Aufmaßerfassung können Bautrupps vor Ort tatsächlich verlegte Strecken, eingesetzte Materialien und Hausanschlüsse mit einem mobilen Endgerät, beispielsweise einem Tablet oder einem mobilen Computer, beispielsweise einem Laptop, erfassen. Die Dokumentation der Hausbesichtigungen erfolgt in der Regel bereits bei der Vorbereitung von Gebäudeanschlüssen, wozu beispielsweise Daten wie die genaue Position des Gebäudeanschlusses und Fotos direkt in der Operationsanwendung dokumentiert werden können. Die erfassten aktuellen Daten zum Baufortschritt und eventuelle Abweichungen fließen direkt in die Planungssoftware ein, so dass beispielsweise mit dem Planungsmodul in Echtzeit das benötigte Material angepasst werden kann. Alle relevanten Projektdaten, insbesondere der tatsächliche Trassenverlauf, das verbaute Material und Anschlussdetails, werden mit Hilfe des Dokumentationsmoduls fortlaufend gesichert. Weiterhin können mit dem Dokumentationsmodul Echtzeitübersichten über den Baufortschritt, Kostenprognosen und Engpässe erfasst werden, so dass ein proaktives Projektcontrolling ermöglicht wird. Insbesondere für Archivierungszwecke ist es weiterhin vorteilhaft, wenn die erstellte Dokumentation als pdf-Bericht exportiert werden kann.

Zusätzlich ist es vorteilhaft, wenn neben der Erfassung des Baufortschritts auch Montageprozesse vor Ort unterstützt werden können. So ist es insbesondere bevorzugt, wenn die optischen Signale von einem Port der Fasermanagement-Sockelleiste zur exakten Lokalisierung eines Kabels App-basiert gesendet werden.

Die Planungssoftware kann weiterhin umfasst ein Modul für Service- und Wartungsplanung umfassen. Hierzu bleibt die Planungssoftware auch nach Abschluss der Bauphase im Einsatz. Störungen und Erweiterungen können so effektiv und effizient eingepflegt werden, da alle Daten, beispielsweise die Kabelpläne bereits digital hinterlegt sind. Für die Service- und Wartungsplanung ermöglicht dieses Modul auch die Terminierung von Wartungsteams und die Dokumentation von Reparaturen, wobei diese direkt in der Plattform erfolgen können.

Darüber hinaus unterstützt die Software vorzugsweise auch den Betrieb der gebauten Netzinfrastruktur, insbesondere im Hinblick auf die Nutzung durch unterschiedliche Netzanbieter. Mittels integrierter Konzepte wie beispielsweise Open Access können Zugangsrechte verschiedener Anbieter verwaltet und koordiniert werden. Die Software ermöglicht die strukturierte Abbildung dieser Mehranbieter-Modelle, inklusive Kapazitätsmanagement, Nutzungsdokumentation und Steuerung von Zugriffsberechtigungen. So wird ein effizienter und transparenter Betrieb der Netze auch über die Bauphase hinaus gewährleistet.

Durch die einzelnen Module deckt die Software sämtliche Schritte von der initialen Projektvorkalkulation über die Planungs- und Bauphase bis hin zur fortlaufenden Dokumentation und Wartung ab.

Neben der Verlegung von Glasfaserkabeln können das erfindungsgemäße Kabelkanalsystem und das Verfahren auch für die Verlegung von Strom- und Steuerleitungen genutzt werden. Auch ist die parallele Verlegung unterschiedlicher Kabel im Kabelkanal möglich, insbesondere die parallele Verlegung von Glasfaserkabeln und Stromkabeln.

Das Kabelkanalsystem und das Verfahren zur Verlegung von Kabeln mit dem Kabelkanalsystem können beispielsweise von Telekommunikationsanbietern genutzt werden, die Glasfasernetze für schnelle Internetzugänge in urbanen und ländlichen Räumen verlegen. Durch die kurzen Bauzeiten und die Möglichkeit der sofortigen Teilaktivierung können die Versorgungsqualität verbessert und der Breitbandausbau beschleunigt werden.

Weiterhin ist eine Nutzung durch Stadt- und Kommunalverwaltungen möglich, insbesondere für geplante Straßen- und Gehwegsanierungen, die mit dem Ausbau digitaler Infrastruktur kombiniert werden können. Durch minimale Eingriffe in Verkehrs- und Fußgängerbereiche können die Akzeptanz bei Anwohnern erhöht und die Kosten gesenkt werden.

Für Industriegebiete und Gewerbeparks können die in der Regel hohen Belastungsanforderungen durch passende Materialauswahl erfüllt werden. Zudem ermöglicht die modulare Erweiterbarkeit eine flexible Anpassung an wachsende Produktions- und Lagerflächen. Von Energie- und Versorgungsunternehmen können das Kabelkanalsystem und das Verfahren zur Verlegung von Kabeln mit dem Kabelkanalsystem genutzt werden, um parallel Strom- oder Steuerkabel zu verlegen. Weiterhin ist durch die modulare Struktur mit Steckverbindern eine schnelle Verfügbarkeit von Anschlusspunkten, beispielsweise für Ladesäulen für Elektrofahrzeuge, gegeben, wodurch auch der Ausbau der Elektromobilität unterstütz werden kann.

Im privaten Haus- und Wohnungsbau können auf einfache Weise Netzverdichtungen durchgeführt werden, die von der mindertiefen Verlegung in kleinen Siedlungsstraßen und in Einfahrten profitieren. Zudem werden durch einfache Nachrüstbarkeit der Immobilienwert und die Zukunftssicherheit erhöht.

Ausführungsbeispiele der Erfindung sind in den Figuren dargestellt und werden in der nachfolgenden Beschreibung näher erläutert.

Es zeigen:
- Figur 1a: eine isometrische Ansicht einer Wanne ohne Stege;
- Figur 1b: eine isometrische Ansicht einer Wanne mit Stegen;
- Figur 2a: eine isometrische Ansicht eines Deckels;
- Figur 2b: eine isometrische Ansicht eines Deckels mit parallel zur Verlegerichtung verlaufenden Stegen;
- Figur 3a: eine isometrische Ansicht einer Wanne mit einem Knick;
- Figur 3b: eine isometrische Ansicht eines Deckels für die in Figur 3a gezeigte Wanne;
- Figur 4: eine isometrische Ansicht eines Verbindungsstücks;
- Figur 5a: eine isometrische Ansicht eines Zugangsschachts;
- Figur 5b: eine Schnittdarstellung eines Zugangsschachts ohne Stege;
- Figur 5c: eine Schnittdarstellung eines Zugangsschachts mit Stegen;
- Figur 6: eine isometrische Ansicht eines T-Stücks;
- Figur 7: eine isometrische Ansicht eines T-Stücks in einer alternativen Ausführungsform;
- Figur 8: eine isometrische Ansicht eines Universalschachts;
- Figur 9: eine isometrische Ansicht einer Kabelhalterung für einen Universalschacht;
- Figur 10: eine isometrische Ansicht eines Schachtdeckels;
- Figur 11a: eine isometrische Ansicht eines Absenkschachts;
- Figur 11b: eine isometrische Ansicht eines Deckels für einen Absenkschacht;
- Figur 12: eine isometrische Ansicht eines Adapters;
- Figur 13: eine isometrische Darstellung zur Verlegung des Kabelkanalsystems;
- Figur 14: eine isometrische Ansicht eines Anschlussschachts an ein bestehendes System
- Figur 15: eine Darstellung des Kabelkanalsystems in einem Gehweg mit Hausanschlussschächten;
- Figur 16: eine Darstellung des in einem gepflasterten Gehweg verlegten Kabelkanalsystems;
- Figur 17: Eine Draufsicht auf einen geöffneten Hausanschlussschacht.

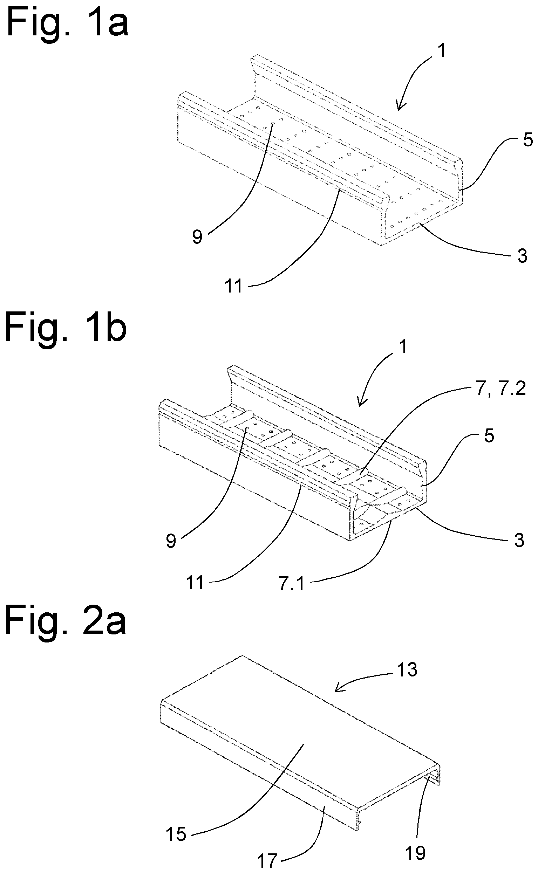

In den Figuren 1a und 1b ist jeweils eine isometrische Ansicht einer Wanne für ein erfindungsgemäßes Kabelkanalsystem dargestellt.

Eine Wanne 1 umfasst einen Boden 3 sowie Seitenwandungen 5. Damit nach der Verlegung sich gegebenenfalls in der Wanne 1 sammelndes Wasser ablaufen kann, weist diese in ihrem Boden 3 Drainageöffnungen 9 auf.

Um die Wanne 1 sicher mit einem Deckel verschließen zu können, sind die Seitenwandungen 5 mit einer Nut 11 versehen, in die eine Lasche des Deckels eingreifen kann.

Im Unterschied zu der in Figur 1a dargestellten Wanne sind bei der in Figur 1b gezeigten Wanne zur Stabilisierung im Boden Stabilisierungsstege 7 ausgebildet. In der in Figur 1b dargestellten Ausführungsform verläuft ein erster Stabilisierungssteg 7.1 parallel zur Laufrichtung der Wanne 1, das heißt parallel zur Verlegungsrichtung der Kabel in der Wanne 1. Neben dem ersten Stabilisierungssteg sind weitere Stabilisierungsstege 7.2 vorgesehen, die quer zum ersten Stabilisierungssteg 7.1 verlaufen. Nach der Verlegung der Kabel liegen diese auf den weiteren Stabilisierungsstegen 7.2 auf.

Üblicherweise sind die Wannen 1, wie hier dargestellt, gerade. Um Bögen zu realisieren ist es jedoch auch möglich, die Wanne mit einem Radius zu gestalten oder als Balgen auszuführen. Insbesondere die Ausführung als Balgen hat den Vorteil, dass beliebige Richtungsänderungen, auch Höhenänderungen auf einfache Weise durch Verformung des Balgens realisiert werden können.

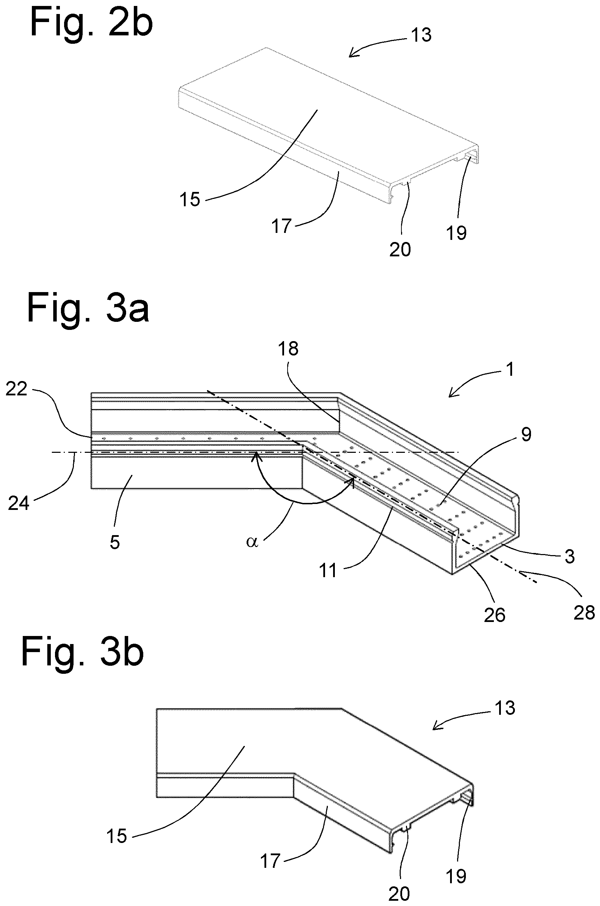

Ein Deckel, mit dem sich die Wanne 1 verschließen lässt, ist in isometrischer Darstellung in den Figuren 2a und 2b gezeigt.

Ein Deckel 13 zum Verschließen der Wannen 1 weist eine Oberseite 15 sowie Seitenwandungen 17 auf. Nach dem Verschließen der Wannen 1 umschließen die Seitenwandungen 17 des Deckels die Seitenwandungen 5 der Wanne 1. Für einen sicheren Halt des Deckels 13 auf der Wanne 1 sind in den Seitenwandungen 17 Federn 19 ausgebildet, die nach dem Verschließen der Wannen 1 in die Nuten 11 in den Seitenwandungen 5 der Wannen 1 eingreifen. Die Verbindung wirkt dabei wie eine Klickverbindung, mit der die Wannen 1 fest verschlossen werden können.

Um bei Belastung nicht beschädigt zu werden, können im Deckel 13 Stabilisierungsstege ausgebildet sein. Diese können beispielsweise quer zur Verlegerichtung der Kabel, diagonal zur Verlegerichtung der Kabel oder parallel zur Verlegerichtung der Kabel ausgerichtet sein, wobei auch Kombinationen aus unterschiedlichen Richtungen der Stabilisierungsstege möglich sind. Bei der in Figur 2b gezeigten Ausführungsform sind Stabilisierungsstege 20 parallel zur Verlegerichtung der Kabel ausgebildet.

In den Figuren 3a und 3b sind eine Wanne mit einem Knick und ein Deckel zum Verschließen der Wanne dargestellt.

Um die Kabel auch um Kurven führen zu können, ist es vorteilhaft, wenn Wannen 1 umfasst sind, mit denen sich eine Kurvenführung realisieren lässt. Hierzu können die Wannen 1, wie in Figur 3a dargestellt, mit einem Knick 18 ausgeführt sein. Alternativ zu einem Knick ist es jedoch auch möglich, die Wannen 1 mit einem Radius zu gestalten.

Durch den Knick oder den Radius weisen eine senkrecht zu einem ersten Ende 22 verlaufende erste Achse 24 und eine senkrecht zu einem zweiten Ende 26 verlaufende zweite Achse 28 einen Winkel α zueinander auf. Der Winkel α kann jeden beliebigen Wert zwischen 0 und 180° annehmen. Bevorzugt liegt der Winkel α in einem Bereich von 90 bis 170°. Geeignete Winkel α sind zum Beispiel 90°, 120°, 135°, 150° oder 165°.

Abhängig vom zu verlegenden Radius ist es möglich, mehrere Wannen 1 mit einem Knick oder Bogen direkt hintereinander zu verlegen oder zwischen jeweils zwei Wannen 1 mit einem Knick oder Bogen mindestens eine gerade Wanne 1 zu verlegen. Der Winkel α für jede Wanne 1 mit Knick oder Bogen wird dabei so gewählt, dass die Wannen 1 einen Polygonabschnitt entlang des gewünschten Radius bilden.

Ein für die Wanne 1 mit Knick 18 passender Deckel 13 ist in Figur 3b gezeigt. Damit die Deckel 13 versetzt zueinander aufgebracht werden können, ist es bevorzugt, wenn der Deckel 13, mit dem die Wanne 1 mit Knick 18 verschlossen wird, kürzer ist als die beiden Schenkel der Wanne 1. Wenn die Wanne keinen Knick, sondern einen Radius aufweist, ist es bevorzugt, wenn sich an den Radius noch ein gerader Teil anschließt, damit ein eine sich an die Wanne 1 mit Radius anschließende gerade Wanne 1 verschließender Deckel auch den geraden Teil der Wanne 1 mit Radius verschließen kann, um so ein durchgehendes Verschließen der Wannen 1 mit versetzt aufgebrachten Deckeln 13 zu ermöglichen.

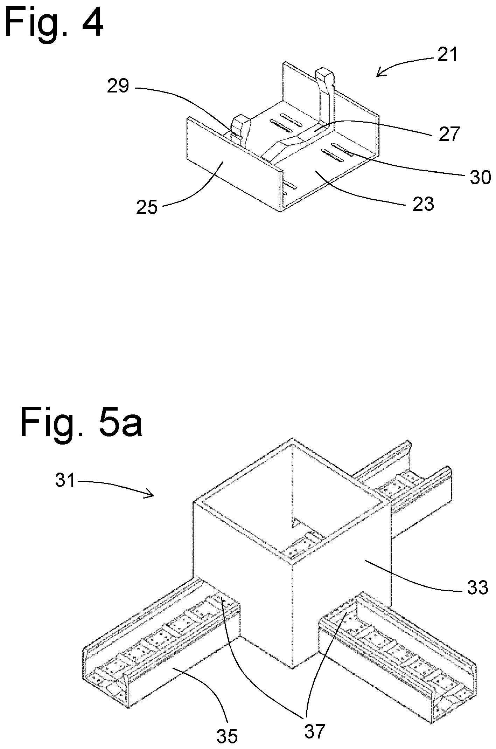

Da die Wannen 1 vorzugsweise als fertig konfektionierte Bauteile gefertigt werden, ist es zur Herstellung eines Kabelkanals erforderlich, mehrere Wannen 1 miteinander zu verbinden. Hierzu ist es möglich, die Wannen jeweils einseitig aufzuweiten, so dass eine nachfolgende Wanne überlappend eingesetzt werden kann oder alternativ zu verjüngen, so dass die Wandung mit dem verjüngten Querschnitt in eine nachfolgende Wanne eingesetzt werden kann. Bevorzugt ist es jedoch, Verbindungsstücke zur Verbindung der Wannen 1 zu nutzen. Ein solches Verbindungsstück ist isometrisch in Figur 4 gezeigt.

Ein Kanal-Verbindungstück 21 weist eine u-förmige Gestalt mit einem Boden 23 und Seitenwänden 25 auf, wobei der Boden 23 und die Seitenwände 25 so ausgeführt sind, dass diese nach Montage die Wannen 1 außen umschließen.

Umschlossen von Boden 23 und Seitenwänden 25 ist ein Steg 27, dessen Querschnittsgeometrie der Querschnittsgeometrie des Bodens 3 und der Seitenwandungen 5 der Wannen 1 entspricht. Bei Montage können so die Wannen 1 bis an den Steg 27 geschoben werden und es entsteht ein durchgängiger Kanal mit einer konstanten Innengeometrie.

Um die Kanäle sicher zu verschließen und eine stabile Verbindung zu erhalten, werden die Deckel 13 vorzugsweise versetzt zu den Wannen 1 aufgesetzt. Aus diesem Grund weist auch der Steg 27 Nuten 29 auf, in die die Feder 19 des Deckels 13 eingreifen kann. Weiterhin sind die Seitenwände 25 des Verbindungsstücks 21 nur so hoch ausgeführt, dass die die Seitenwandungen 17 nach Montage oberhalb der Seitenwände 25 des Verbindungsstücks 21 enden und diese nicht überlappen.

Weiterhin sind im Verbindungsstück 21 Öffnungen 30 ausgebildet. Diese sind vorzugsweise so positioniert, dass sie nach Montage mit einer Wanne 1 eine durchgehende Öffnung mit den Drainageöffnungen 9 der Wanne 1 bilden. Um einen Längenausgleich zu ermöglichen und zu verhindern, dass sich in diesem Fall die Öffnungen 30 und die Drainageöffnungen 9 so gegeneinander verschieben, dass keine durchgehende Öffnung mehr vorhanden ist, sind die Öffnungen 30 im Verbindungsstück 21 vorzugsweise wie hier dargestellt als Langlöcher ausgebildet. Neben der Nutzung der eine durchgehende Öffnung bildenden Öffnungen 30 und Drainageöffnungen 9 als Wasserablauf ist es auch möglich, Nieten, insbesondere Kunststoffnieten durch die Öffnungen 30 und die Drainageöffnungen 9 zu führen und auf diese Weise das Verbindungsstück 21 fest mit der Wanne 1 zu verbinden.

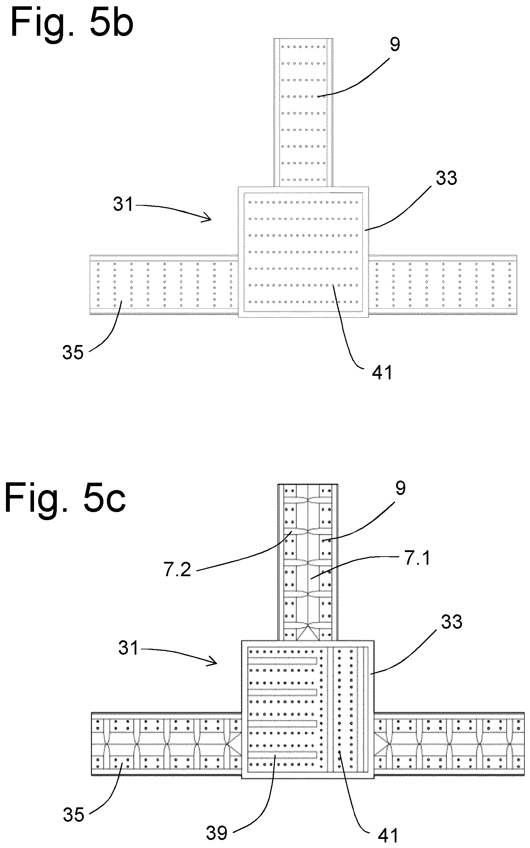

In den Figuren 5a, 5b und 5c ist jeweils ein Zugangsschacht dargestellt.

Figur 5a zeigt den Zugangsschacht in isometrischer Darstellung, Figur 5b eine Draufsicht auf den Zugangsschacht ohne Stege im Boden und Figur 5c eine Draufsicht auf den Zugangsschacht mit Stegen.

Ein Zugangsschacht 31, beispielsweise ein Hausanschlussschacht, umfasst einen Schacht 33 mit Zugang von oben sowie an den Schacht 33 angeschlossene Anschlusswannen 35, die mit weiteren Wannen 1 jeweils einen Kabelkanal bilden. Die mit dem Schacht 33 verbundenen Anschlusswannen 35 sind dabei jeweils genauso gestaltet wie die Wannen 1, wie sie in den Figuren 1a und 1b dargestellt sind.

Über Öffnungen 37 können die einzelnen Kabel aus jeder Anschlusswanne 35 in den Schacht 33 münden. Im Schacht können die Trassenkabel über Steckverbindungen miteinander verbunden werden. Weiterhin ist es auch möglich, um die Anzahl der Steckverbindungen zu minimieren, nur einen Abzweig aus dem Trassenkabel vorzusehen, der dann mit einem weiteren Kabel, beispielsweise einem Anschlusskabel zur Versorgung eines Gebäudes mit einer Steckverbindung verbunden werden kann.

In der hier dargestellten Ausführungsform weist der Zugangsschacht 31 drei Anschlüsse 37 auf, durch die Kabel geführt werden können, beispielsweise Trassenkabel oder Zugangskabel. Neben der hier dargestellten Ausführungsform eines Zugangsschachts 31, der insbesondere als Hausanschlussschacht genutzt werden kann, ist es auch möglich, nur zwei Anschlüsse oder auch mehr als zwei Anschlüsse, beispielsweise vier Anschlüsse vorzusehen. Wenn mehr als vier Anschlüsse erforderlich sind, können entweder mehrere Zugangsschächte 31 nebeneinander positioniert werden, oder es wird ein Zugangsschacht 31 genutzt, der entweder mehr als einen Anschluss an einer Seite aufweist oder mehr als vier Seiten.

Bei einem Zugangsschacht 31 mit zwei Anschlüssen 37 können die Anschlüsse 37 entweder gegenüber liegen oder an zwei benachbarten Seiten. Vorzugsweise werden Zugangsschächte 31 mit zwei Anschlüssen 37 eingesetzt, wenn kein Abzweig vorgesehen ist, sondern nur Trassenkabel im Zugangsschacht 31 miteinander verbunden werden sollen. Ein Zugangsschacht 31 mit zwei Anschlüssen an benachbarten Seiten kann beispielsweise genutzt werden, wenn das Trassenkabel um eine Ecke geführt werden soll.

Damit in den Zugangsschacht 31 eindringendes Wasser ablaufen kann, sind, wie in Figur 5b oder Figur 5c dargestellt, vorzugsweise auch im Boden des Schachts 33 Drainageöffnungen 41 ausgebildet. Für eine klare Kabelführung im Zugangsschacht ist es möglich, beispielsweise Führungsstifte in einzelne Drainageöffnungen 41 zu stecken, wobei die Kabel nach der Verlegung entlang der Führungsstifte geführt werden.

Im Unterschied zu der in Figur 5b gezeigten Ausführungsform ist in der in Figur 5c gezeigten Draufsicht zu erkennen, dass am Boden des Schachts 33 zusätzlich Stege 39 ausgebildet sind. Diese dienen zum einen zur Verstärkung des Bodens, zum anderen können auf die Stege 39 die Kabel aufgelegt werden.

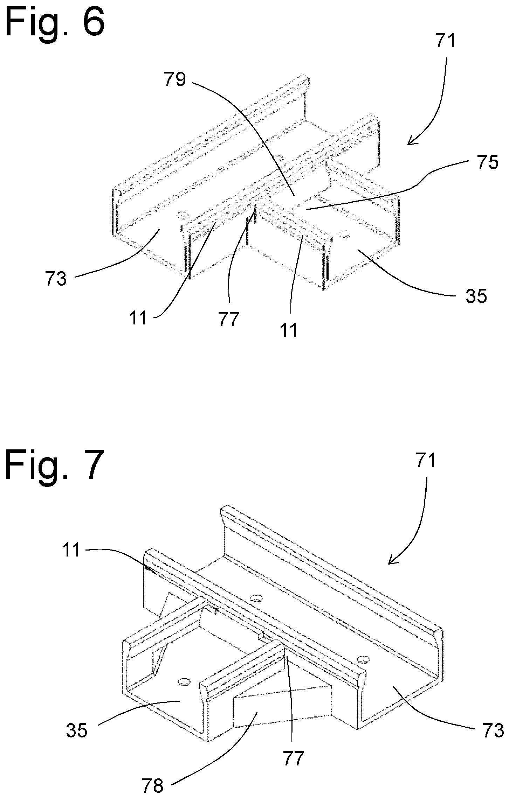

Um einen Abzweig zu realisieren, ist es alternativ auch möglich, ein T-Stück 71 einzusetzen, wie es beispielsweise in Figur 6 dargestellt ist. Das T-Stück 71 umfasst einen Wannenabschnitt 73, an den die Wannen 1 angeschlossen werden können, um einen durchgehenden Kabelkanal zu realisieren. Im Wannenabschnitt 73 ist eine Öffnung 75 ausgebildet, an die eine Anschlusswanne 35 angebunden ist.

Zum Verschließen des T-Stücks 71 ist es möglich, einen ebenfalls in Form eines T-Stücks ausgebildeten Deckel zu verwenden. Bevorzugt ist es jedoch, die Deckel 13 zu verwenden, die auch zum Verschließen der Wannen 1 genutzt werden. Hierzu sind an der Anschlusswanne 35 Ausschnitte 77 ausgebildet, die so geformt sind, dass der Deckel zum Verschließen des Wannenabschnitts 73 eingesetzt werden kann.

Weiterhin ist es vorteilhaft, wenn die Öffnung 75 so ausgebildet ist, dass oberhalb der Öffnung ein Teil 79 der Wandung des Wannenabschnitts 73 erhalten bleibt, insbesondere der Teil, in dem die Nut 11 zur Aufnahme der Feder 19 des Deckels 13 ausgebildet ist.

Die Anschlusswanne 35 weist ebenfalls eine Nut 11 zur Aufnahme der Feder des Deckels 13 auf. Zum Verschließen kann der Deckel 13, der die Anschlusswanne 35 verschließt bis an den Deckel 13, der den Wannenabschnitt 73 verschließt, herangeschoben werden, so dass alle Wannen, die das T-Stück bilden, verschlossen werden können.

Wenn nicht nur ein Abzweig vorgesehen ist, sondern Abzweige in beide Richtungen erfolgen sollen, kann auf der der hier dargestellten Anschlusswanne 35 gegenüberliegenden Seite des Wannenabschnitts 73 eine weitere Öffnung mit daran angeschlossener Anschlusswanne ausgebildet sein, so dass sich eine Kreuzung ergibt. Diese ermöglicht neben einem Abzweig alternativ auch das Kreuzen von Kabeln.

Eine alternative Ausführungsform eine T-Stücks ist in Figur 7 dargestellt. Im Unterschied zu der in Figur 6 gezeigten Ausführungsform weist das in Figur 7 dargestellte T-Stück eine konische Aufweitung 78 auf, um die Kabelführung um die Biegung zu vereinfachen und einen ausreichend großen Biegeradius der Kabel, insbesondere der Glasfaserkabel, zu ermöglichen. Die Aufweitung 78 hat eine Höhe, die unterhalb der Position endet, an der sich die Unterkante des Deckels bei verschlossenem Wannenabschnitt 73 befindet. Weiterhin ist die konische Aufweitung nach oben verschlossen, so dass hier kein zusätzlicher Deckel benötigt wird.

Alternativ zu der hier dargestellten Ausführung mit konischer Aufweitung ist es auch möglich, die Aufweitung mit einem Kreisbogen zu gestalten, so dass die Kabel auch entlang des Kreisbogens geführt werden können. Der Radius des Kreisbogens ist dabei vorzugsweise größer als der minimal zulässige Biegeradius für das zu verlegende Kabel.

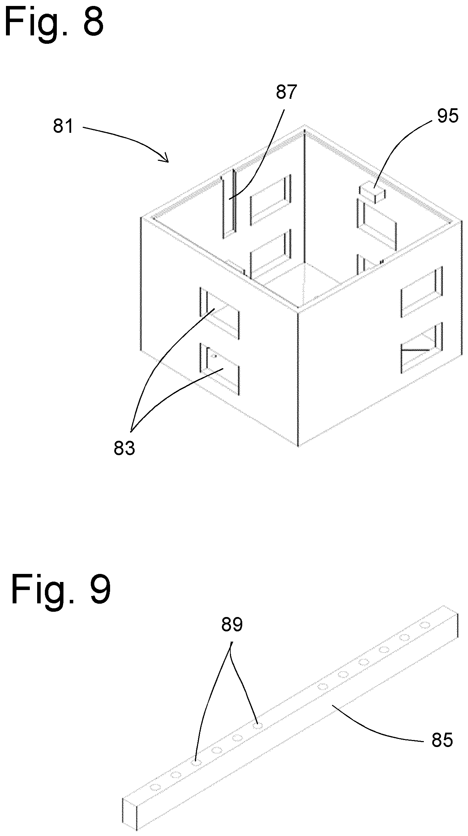

Alternativ zu einem Zugangsschacht 31 ist es auch möglich, einen Universalschacht 81 einzusetzen, wie er beispielhaft in isometrischer Ansicht in Figur 8 gezeigt ist. Mit dem Universalschacht 81 ist es nicht nur möglich, Abzweige zu realisieren, sondern es können auch Höhenunterschiede ausgeglichen werden. Hierzu weist der Universalschacht 81 nicht nur die Anzahl an Anschlussöffnungen 83 auf, die an der Einsatzposition des Schachts benötigt werden, sondern Anschlussöffnungen 83 an allem möglichen Positionen, an denen bei beliebigem Einsatz Kabel durchgeführt werden können, beispielsweise für Abzweigungen, für den Ausgleich von Höhenunterschieden oder auch für das Kreuzen von Leitungen.

In der hier dargestellten Ausführungsform weist der Universalschacht 81 jeweils zwei Anschlussöffnungen 83 auf jeder Seite auf, wobei die zwei Anschlussöffnungen 83 jeweils übereinander angeordnet sind. Neben der Anordnung direkt übereinander ist es auch möglich, die Anschlussöffnungen 83 jeder Seite versetzt zueinander anzuordnen. Weiterhin ist es auch möglich, mehr als zwei Anschlussöffnungen 83 an einer Seite vorzusehen.

Die Anschlussöffnungen 83 sind bevorzugt, wie hier dargestellt, als Löcher in den Wandungen des Universalschachts 81 ausgebildet. Alternativ ist es jedoch auch möglich, jeweils Anschlusswannen vorzusehen, wobei diese bevorzugt kürzer gestaltet sind, als vorstehend in den Figuren 5a bis 5c für den Zugangsschacht 31 gezeigt.

Um die Kabel im Universalschacht geordnet zu führen, ist es weiterhin bevorzugt, eine Kabelhalterung 85 vorzusehen, wie sie in Figur 9 dargestellt ist. Die Kabelhalterung 85 ist dabei vorzugsweise als separates Bauteil ausgeführt und kann in Nuten 87 im Universalschacht 31 positioniert werden. Für eine geordnete Anordnung der Kabel oder Kabelstränge im Universalschacht weist die Kabelhalterung 85 vorzugsweise Löcher 89 auf, durch die die einzelnen Kabel oder Kabelstränge geführt werden können. Wenn die Kabelhalterung 85, wie hier dargestellt, ein separates Bauteil ist, ist es möglich, die Kabel oder Kabelstränge zuerst durch die Löcher 89 in der Kabelhalterung zu führen und danach die Kabelhalterung in den Universalschacht 81 einzusetzen. Hierdurch wird ein ergonomischeres Verlegen der Kabel ermöglicht.

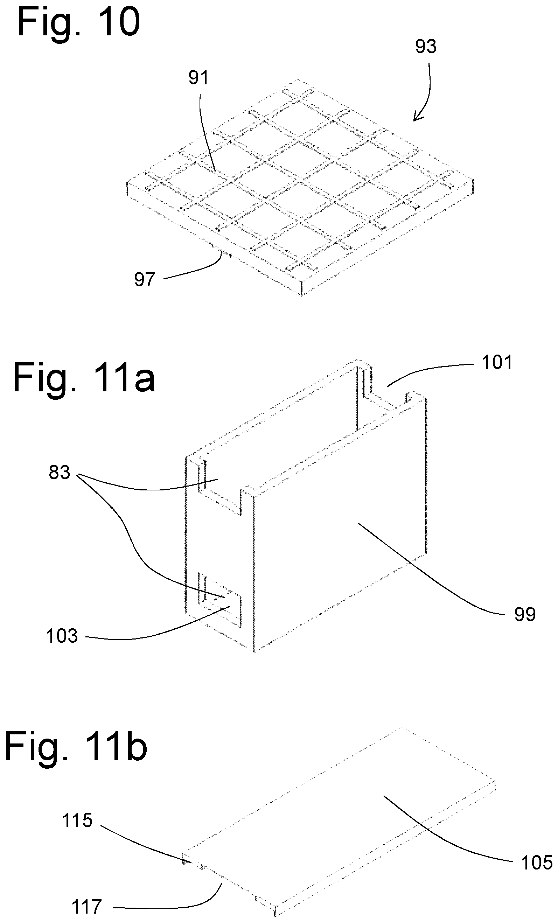

Insbesondere wenn der Universalschacht 81 auch als Zugangsschacht eingesetzt werden soll, ist es bevorzugt, diesen mit einem Schachtdeckel 93 zu verschließen, der betreten werden kann, um den Schacht nach Verlegung der Kabel für mögliche Überprüfungen, Revisionen oder Wartungen zugänglich zu halten. Insbesondere bei Positionierung des Universalschachts in einem Gehweg oder einer Straße ist es vorteilhaft, den Schachtdeckel 93 so zu gestalten, dass dieser auch bei Nässe gefahrlos betreten werden kann und ein Ausrutschen so weit wie möglich verhindert wird. Hierzu ist es beispielsweise möglich, wie in Figur 10 gezeigt, ein Profil 91 im Schachtdeckel 93 vorzusehen. Das Profil kann dabei, wie hier dargestellt, durch aufgesetzte Rippen gebildet werden. Alternativ ist es beispielsweise auch möglich, die Oberfläche des Schachtdeckels 93 rau zu gestalten oder jedes beliebige Muster an Vertiefungen oder Erhebungen, beispielsweise Vertiefungen durch Nuten, im Schachtdeckel 93 vorzusehen.

Der Schachtdeckel 93 kann dabei auf jede beliebige, dem Fachmann bekannte Weise mit dem Universalschacht 81 verbunden werden. Zum Beispiel ist es möglich, eine Klickverbindung zu nutzen, um den Schachtdeckel 93 fest mit dem Universalschacht 81 zu verbinden.

Um den Schachtdeckel 93 bei Bedarf, beispielsweise für eine Revision, wieder öffnen zu können, ist es bevorzugt, diesen so mit dem Universalschacht 81 zu verbinden, dass beim Öffnen weder der Schachtdeckel 93 noch der Universalschacht 81 beschädigt werden. Hierzu ist es zum Beispiel möglich, Laschen 95 vorzusehen, in die Schrauben eingeschraubt werden können, mit denen der Schachtdeckel 93 auf dem Universalschacht 81 aufgeschraubt wird. Zum Verschrauben werden hierbei vorzugsweise im Schachtdeckel 93 Schraubenlöcher vorgesehen, die sich an den Positionen befinden, an denen die Laschen 95 am Universalschacht 81 ausgebildet sind. Zur Befestigung des Schachtdeckels 93 werden dann Schrauben durch die Schraubenlöcher im Schachtdeckel 93 geführt und in die jeweilige Lasche 95 eingeschraubt. Hierzu ist es möglich, dass in den Laschen 95 bereits Gegengewinde ausgebildet sind. Alternativ können auch Schrauben genutzt werden, mit denen beim Aufschrauben des Schachtdeckels 93 die entsprechenden Gewinde in die Laschen 95 geschnitten werden.

Um zu verhindern, dass der Universalschacht 81 unbefugt geöffnet wird, ist es weiterhin bevorzugt, wenn der Schachtdeckel 93 abschließbar auf dem Universalschacht 81 montiert werden kann. Hierzu werden vorzugsweise Verriegelungselemente 97 vorgesehen, die mit den Laschen 95 am Universalschacht 81 zusammenwirken. Neben dem Verschließen durch Nutzung der Laschen 95 ist jedoch auch jede beliebige andere Variante denkbar, mit der ein sicheres Verschließen der Schachtdeckel 93 auf dem Universalschacht 81 ermöglicht wird.

Entsprechende Schachtdeckel 95 mit einer solchen Befestigung der Schachtdeckel 93 werden vorzugsweise auch für die Zugangsschächte 31 vorgesehen.

In den Figuren 11a und 11b sind ein Absenkschacht und ein Deckel für den Absenkschacht dargestellt.

Ein Absenkschacht 99 kann insbesondere eingesetzt werden, wenn Höhenunterschiede ausgeglichen werden müssen. Dies ist zum Beispiel dann der Fall, wenn die Kabelkanäle entlang einer Treppe geführt werden sollen oder auch dann, wenn beispielsweise eine Straße gekreuzt werden soll und die Kabel unterhalb der Straße in größerer Tiefe verlegt werden müssen, als die Kabel die in einem parallel zum Gehweg oder unterhalb eines Gehwegs verlaufenden Kabelkanal verlegt werden. Hierzu weist der Absenkschacht Anschlussöffnungen 83 in unterschiedlichen Höhen auf. Hierbei können in jeder Wandung, in der Anschlussöffnungen 83 ausgebildet sind, die Anschlussöffnungen 83 in unterschiedlicher Höhe angeordnet sein, wie hier dargestellt. Alternativ ist es auch möglich, in einer Wandung eine Anschlussöffnung 83 in einer oberen Position 101 und in einer anderen Wandung eine Anschlussöffnung 83 in einer unteren Position 103 anzuordnen. Abhängig davon, ob mit dem Absenkschacht 99 nur eine Höhenänderung oder eine mit der Höhenänderung gleichzeitige Richtungsänderung der Kabelführung vorgesehen ist, können die Anschlussöffnungen 83 in gegenüberliegenden Wandungen wie hier dargestellt, oder in aneinandergrenzenden Wandungen ausgebildet sein.

Damit der Absenkschacht 99 bündig mit dem oberen Abschluss in das Kabelkanalsystem eingebunden werden kann, befinden sich die Anschlussöffnungen 83 in der oberen Position so weit oben im Absenkschacht, dass der Deckel 105 bündig mit dem Deckel 13 einer an die Anschlussöffnung angeschlossenen Wanne 1 abschließt.

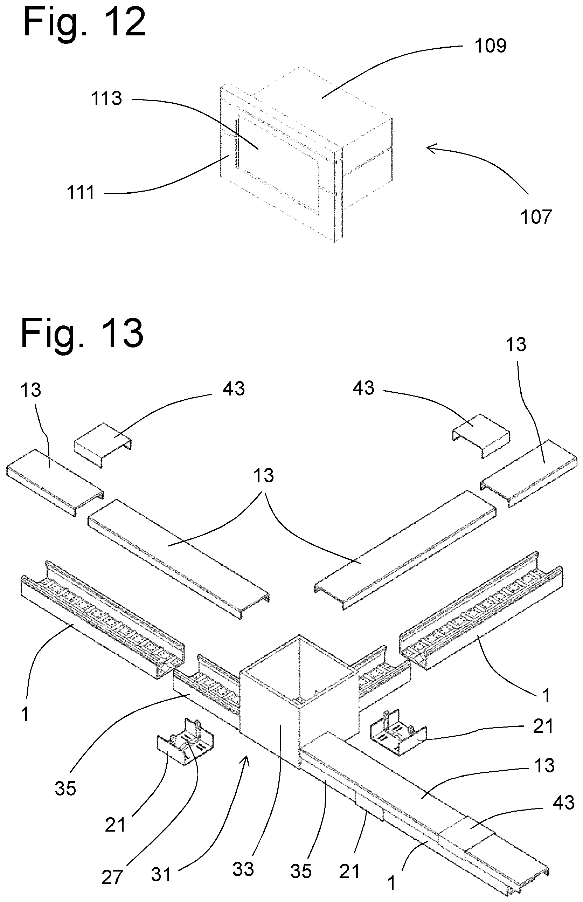

Wenn keine Anschlusswannen zum Verbinden mit den Wannen 1 des Kabelkanalsystems vorgesehen sind, sondern Öffnungen, wie beispielhaft für den Universalschacht 81 oder den Absenkschacht 99, werden zur Verbindung der Wannen 1 vorzugsweise Adapter 107 verwendet. Ein solcher Adapter ist beispielsweise in Figur 12 dargestellt.

Der Adapter 107 umfasst einen Korpus 109, der in die Anschlussöffnung 83 eingeschoben wird. Insbesondere, wenn der Schacht mehr Anschlussöffnungen 83 aufweist als benötigt werden, beispielsweise der hier in Figur 8 dargestellte Universalschacht 81 oder der in Figur 11a dargestellte Absenkschacht, ist es möglich Adapter 107 so zu gestalten, dass mit diesen ungenutzte Anschlussöffnungen verschlossen werden können. Besonders vorteilhaft ist es, hierzu einen Deckel am Adapter 107 vorzusehen, der die Öffnung verschließt und der entfernt werden kann, wenn die Anschlussöffnung 83 genutzt werden soll. Hierzu ist es möglich, für den Deckel ein separates Bauteil zu verwenden, oder diesen einstückig mit dem Adapter 107 zu formen und Sollbruchstellen vorzusehen, an denen der Deckel ausgebrochen werden kann.

Damit der Adapter 107 nicht vollständig durch die Anschlussöffnung 83 geschoben werden kann und in den Schacht fallen kann, ist weiterhin ein Anschlag 111 umfasst, der bei eingeschobenem Adapter 107 an der die Anschlussöffnung 83 umschließenden Wandung anliegt.

Die Öffnung 113 des Adapters entspricht der Form des Kanals, der an den Schacht angeschlossen werden soll. Um Wannen 1 mit Deckel 13 anzubinden, ist die Öffnung 113 mit einer Querschnittsform und Größe ausgeführt, die der Querschnittsform und Größe der Wanne 1 mit aufgesetztem Deckel 13 entspricht. Alternativ ist es auch möglich, die Öffnung 113 so zu gestalten, dass nur die Wanne 1 eingeschoben werden kann, der Deckel 13 jedoch außen am Adapter anschlägt. Wenn der Schacht zur Anbindung an schon vorhandene Systeme genutzt werden soll oder andere Kanalformen verwendet werden sollen, ist es möglich, die Öffnung 113 im Adapter entsprechend zu gestalten.

Wenn die Anschlussöffnung 83 in der oberen Position 101, wie bei dem in Figur 11a dargestellten Absenkschacht 99 keine obere Begrenzung aufweist, sondern diese durch den Deckel 105 gebildet wird, muss darauf geachtet werden, dass die Anschlussöffnung 83 nach dem Aufbringen des Deckels eine Größe aufweist, die der des Korpus 109 des Adapters 107 entspricht, so dass der Adapter 107 in die Anschlussöffnung 83 eingeschoben werden kann. Hierzu ist es beispielsweise möglich, die Anschlussöffnung 83 in der gleichen Größe zu bilden wie die Anschlussöffnung 83 in der unteren Position 108. Wenn der Deckel 105 dann einen umlaufenden Rand 115 umfasst, wie hier dargestellt, muss dieser an der Stelle, an der sich die Anschlussöffnung 83 befindet, einen Ausschnitt 117 aufweisen, um den Adapter 107 einschieben zu können.

Figur 13 zeigt beispielhaft ausgehend von einem Zugangsschacht 31 mit drei Anschlüssen, beispielsweise einem Hausanschlussschacht, wie er in den Figuren 5a und 5b gezeigt ist, wie das Kabelkanalsystem verlegt werden kann.

Zur Verlegung des Kabelkanalsystems werden Wannen 1 mit den am Schacht 33 angeschlossenen Wannen 35 verbunden. Hierzu werden die Verbindungsstücke 21 genutzt, wobei die Wanne 1 und die am Schacht 33 angeschlossene Wanne 1 in das Verbindungsstück 21 eingelegt werden, so dass die Wannen am Steg 27 anliegen. Zur dichten Verbindung ist es möglich, hier nicht dargestellte Dichtelemente, beispielsweise Dichtschnüre oder Flachdichtungen einzulegen. Weiterhin können die Verbindungsstücke 21 mit Nieten mit den Wannen 1 und Anschlusswannen 35 verbunden werden.

Abhängig von der gewünschten Länge des Kabelkanals bis zu einem weiteren Zugangsschacht 31 oder zum Kanalende, das beispielsweise mit einer Abdeckung verschlossen werden kann, können weitere Wannen jeweils mit den Verbindungsstücken 21 an die bereits montierten Wannen angeschlossen werden.

Nach der Montage der Wannen werden die hier nicht dargestellten Kabel eingelegt und die Wannen 1 und Anschlusswannen 35 werden mit den Deckeln 13 verschlossen. Bevorzugt ist es, wie hier dargestellt, dass die Deckel 13 so aufgesetzt werden, dass die Verbindungsstellen der Wannen 1 und die Verbindungstellen der Deckel 13 versetzt zueinander sind. Dies kann beispielsweise dadurch erreicht werden, dass die am Schacht 33 angeschlossenen Anschlusswannen 35 kürzer sind als die Wannen 1. Bevorzugt sind die am Schacht 33 angeschlossenen Anschlusswannen 35 halb so lang wie die Wannen 1 und die Deckel 13.

Um den Kabelkanal dicht zu verschließen können Dichtelemente, beispielsweise Dichtschnüre oder Flachdichtungen eingelegt werden. Zusätzlich werden die Deckel 13 an ihren Verbindungsstellen mit Abdeckprofilen 43 überdeckt. Auch die Abdeckprofile 43 können zusätzliche Dichtelemente aufweisen, um eine flüssigkeitsdichte Verbindung zu erhalten.

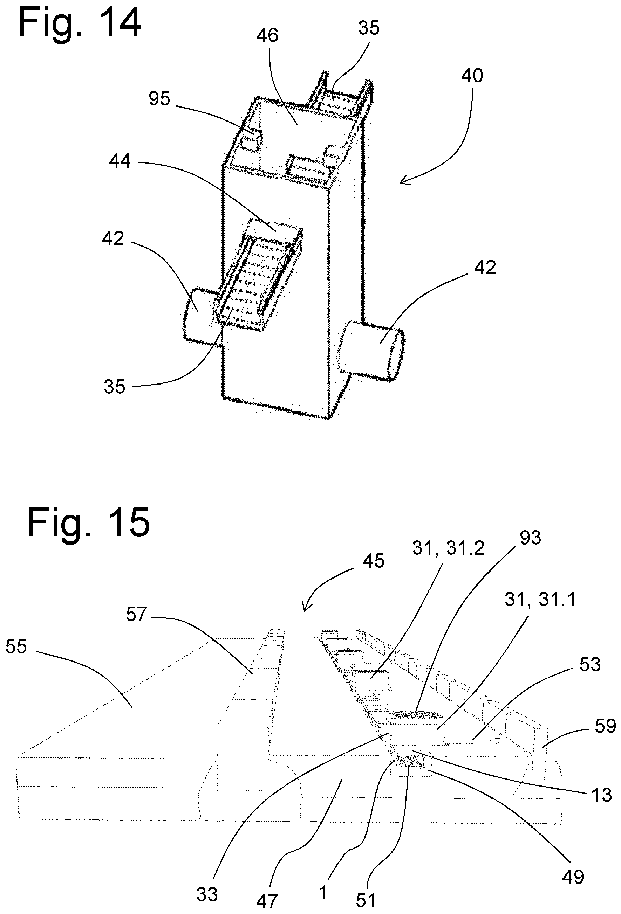

Um das Kabelkanalsystem an ein bereits vorhandenes System mit tiefer verlegten Kabeln, in der Regel 30 bis 60 cm tief verlegten Kabeln, anschließen zu können, können Anschlussschächte eingesetzt werden. Ein solcher Anschlussschacht ist beispielhaft in Figur 14 gezeigt.

Ein Anschlussschacht 40 weist mindestens einen Anschluss 42 auf, über den Kabel aus einem System, das in größerer Tiefe, beispielsweise 30 bis 60 cm, verlegt wurde, in den Anschlussschacht 40 eingeführt werden können. Wenn der Anschlussschacht 40 am Ende eines bereits verlegten Systems eingesetzt wird, so dass alle Kabel in dem erfindungsgemäßen Kabelkanalsystem weitergeführt werden, ist ein Anschluss 42, durch den alle Kabel aus dem bereits verlegten System in den Anschlussschacht 40 geführt werden. Wenn über den Anschlussschacht Kabel aus einem bereits verlegten System abgezweigt werden sollen, so dass ein Teil der Kabel über das bereits verlegte System weitergeführt werden, wobei der Anschlussschacht 40 beispielsweise in ein bereits verlegtes Rohr, durch das die Kabel geführt werden, eingesetzt werden kann, weist der Anschlussschacht, wie hier dargestellt, zwei Anschlüsse 42 auf, durch die die bereits verlegten Kabel geführt werden können.

Die Querschnittsform des mindestens einen Anschlusses 42 wird vorzugsweise so gewählt, dass diese der Querschnittsform der Kabelkanäle des bereits verlegten Systems entspricht, wobei es sich hier insbesondere um Rohre mit einem kreisförmigen Querschnitt handelt, durch das die Kabel geführt werden.

Der Anschluss an das erfindungsgemäße Kabelkanalsystem erfolgt über Anschlusswannen 35, die in der Höhe ausgebildet sind, in der das Kabelkanalsystem verlegt werden soll. Die Anschlusswannen 35 sind dabei so ausgeführt, wie die Anschlusswannen 35 der Zugangsschächte, wie sie beispielhaft in den Figuren 5a bis 5c gezeigt sind. Die Anzahl der Anschlusswannen 35 wird wie bei den Zugangsschächten 31 so gewählt, dass die zu verlegenden Kabel in die entsprechenden Richtungen aus dem Anschlussschacht 40 geführt werden können. Hierbei ist es möglich, dass es sich bei den Kabeln, die über die Anschlusswannen 35 geführt werden, um Kabel für Hausanschlüsse handelt oder, insbesondere wenn der Anschlussschacht 40 am Ende eines bereits verlegten Systems angeschlossen wird, um Trassenkabel.

Um den Versatz der Deckel zu den Wannen 1 zu erhalten, ist es möglich, die Anschlusswannen 35, die am Anschlussschacht 40 ausgebildet sind, bereits mit einem Deckelabschnitt 44 zu verschließen. Dieser kann direkt am Anschlussschacht 40 ausgeformt sein oder, abhängig vom Herstellverfahren, separat gefertigt werden und dann mit der jeweiligen Anschlusswanne 35 und dem Anschlussschacht 40 verbunden werden, beispielsweise mittels einer Schweißverbindung. Es ist jedoch auch möglich, den Deckelabschnitt 44 auf die Anschlusswanne 35 mit der Nut- und Federverbindung einzuklicken und an den Anschlussschacht 40 zu schieben. Auf diese Weise ist der Deckelabschnitt 44 lösbar mit dem Anschlussschacht 40 verbunden.

Entsprechende Deckelabschnitte 44 können auch für die Anschlusswannen 35 der Zugangsschächte 31 vorgesehen sein. Alternativ ist es auch möglich, die Anschlusswannen 35 des Anschlussschachtes 40 wie die Anschlusswannen 35 der in den Figuren 5a bis 5c gezeigten Zugangsschächte ohne einen Deckelabschnitt 44 zu gestalten.

Um den Anschlussschacht, dessen Öffnung 46 auf dem gleichen Niveau wie die Oberfläche liegt, zu verschließen und so zu verhindern, dass Gegenstände in den Anschlussschacht fallen können oder sich Personen verletzen können, die versehentlich in die Öffnung 46 treten, wird die Öffnung mit einem Schachtdeckel 93 verschlossen, der vorzugsweise gestaltet ist wie in Figur 10 dargestellt.

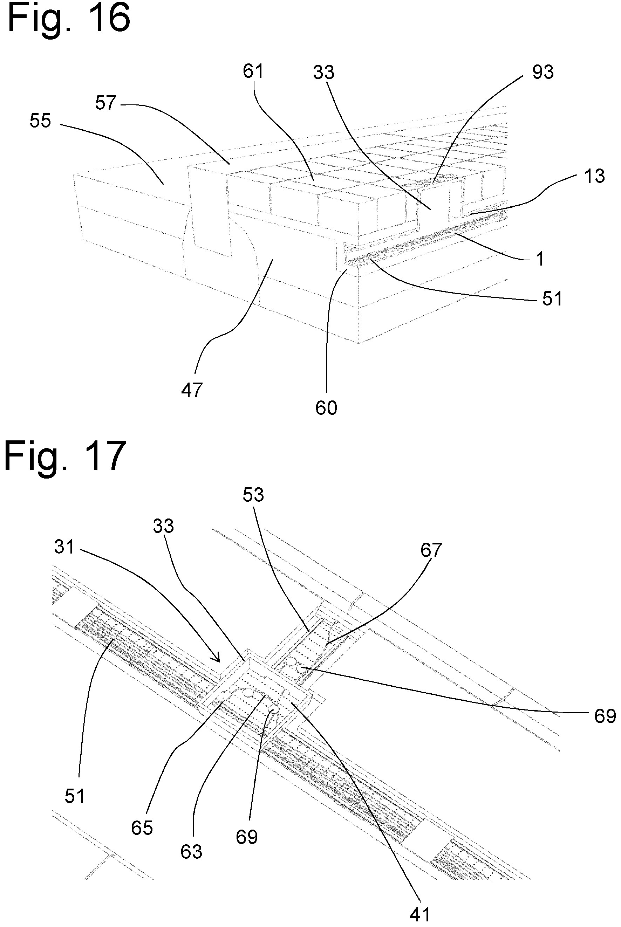

Ein in einem Gehweg verlegtes Kabelkanalsystem ist in den Figuren 15 und 16 dargestellt.

Für die Verlegung des Kabelkanalsystems in einem Gehweg 45 wird in einem ersten Schritt der Gehwegbelag entfernt, beispielsweise die Asphaltschicht oder Pflastersteine, mit denen der Gehweg 45 gepflastert ist.

Anschließend wird in der Tragschicht 47 ein Graben 49 ausgehoben, in den das Kabelkanalsystem, insbesondere Wannen 1 und Zugangsschächte 31 eingelegt wird. In die Wannen 1 werden Kabel 51 eingelegt und anschließend werden die Wannen 1 mit den Deckeln 13 verschlossen.

In der hier dargestellten Ausführungsform sind abwechselnd Zugangsschächte 31.1 mit drei Anschlüssen und Zugangsschächte 31.2 mit zwei Anschlüssen angeordnet. Aus dem dritten Anschluss der Zugangsschächte 31.1 mit drei Anschlüssen verläuft ein Kabelkanal 53 quer zum Gehweg, um beispielsweise an Anschlusskabel zu einem Gebäude zu führen.

In den Zugangsschächten 31.2 mit zwei Anschlüssen werden jeweils Abschnitte des Trassenkabels miteinander mittels einer Steckverbindung verbunden. Alternativ können die Trassenkabel auch einfach durch die Zugangsschächte 31.2 mit zwei Anschlüssen geführt werden. In diesem Fall dienen diese Zugangsschächte 31.2 beispielsweise als Revisionsschächte.

Der hier dargestellte Gehweg verläuft parallel zu einer Straße 55 und ist mit Randsteinen 57 abgegrenzt. Auf der der Straße 55 gegenüberliegenden Seite ist der Gehweg ebenfalls mit Randsteinen 59 abgegrenzt. Durch die Verlegung im Gehweg 45 kann das Kabelkanalsystem ohne großen Eingriff in den laufenden Verkehr verlegt werden.

Die Höhe der Schächte 33 ist so ausgeführt, dass diese bündig mit der Gehwegoberfläche abschließen, nachdem der Gehwegbelag nach Verlegung des Kabelkanalsystems wieder aufgebracht wurde. Um den Gehweg ungehindert nutzen zu können, werden die Schächte 33 mit Schachtdeckeln 93 verschlossen.

Nach Verlegung des Kabelkanalsystems wird zunächst der Graben 49 mit Füllmaterial 60 verfüllt und anschließend wird die Gehwegoberfläche wiederhergestellt, zum Beispiel indem der Gehweg wie in Figur 16 dargestellt mit Pflastersteinen 61 gepflastert wird.

Figur 17 zeigt einen geöffneten Zugangsschacht 31, der als Hausanschlussschacht ausgeführt ist.

Im geöffneten Schacht verläuft ein Kabelstrang mit mehreren Kabeln 1. Eines der Kabel 1 endet im Schacht 33 und ist mit einer Steckverbindung 63 mit einem weiteren Kabelabschnitt 65 verbunden.

Ein weiteres Kabel wird als Anschlusskabel 67 durch den Kabelkanal 53 geführt. Das Anschlusskabel 67 dient üblicherweise der Versorgung eines Gebäudes.

Hierbei ist es möglich, dass das Anschlusskabel 67 aus dem Kabelstrang geführt wird oder, alternativ, dass das Anschlusskabel 67 mit einer Steckverbindung mit einem Kabel des Kabelstrangs verbunden ist.

Um die Kabel im Schacht 33 geordnet zu führen, ist es möglich, Führungsstifte 69 vorzusehen, entlang denen die Kabel geführt werden können. Vorzugsweise werden die Führungsstifte in Drainageöffnungen 41 des Schachts 31 gesteckt.

Nach dem Verlegen der Kabel 1 werden die Wannen 1 und die Zugangsschächte 31 verschlossen und anschließend wird der Gehwegbelag, wenn das Kabelkanalsystem in einem Gehweg verlegt wurde, oder der Straßenbelag, wenn das Kabelkanalsystem in einer Straße verlegt wurde, wieder aufgebaut.

### Beispiel 1

Es soll ein Gebäude mit sechs Wohneinheiten versorgt werden, das in 1,22 km Entfernung zu einem Haupt-Multifunktionsgehäuse liegt. Das Ausgangssignal hat eine Signalstärke von + 3 dB. Jeder Steckeranschluss oder Abzweig verursacht einen Verlust von 0,2 dB. Weiterhin treten Splitterverluste auf, wobei eine Verdoppelung der Anschlüsse am Splitter jeweils zu einem Verlust von 3 dB führt. So liegt bei einem Splitterverhältnis von 1 : 2 der Verlust bei 3 dB, bei einem Verhältnis von 1 : 4 bei 6 dB, bei einem Verhältnis von 1 : 8 bei 9 dB, usw.

Um ein noch verarbeitbares Signal am Endgerät zu erhalten muss die Signalstärke am Endgerät im Bereich zwisch -8 und -27 dB liegen.

Die Dämpfung des Glasfaserkabels je Kilometer wird vernachlässigt.

Für die Verlegung der Trasse werden Kabelsegmente mit einer Länge von jeweils 25 m eingesetzt, die an ihren Enden mit Steckverbindungen verbunden werden, wobei jede Kupplung einen Verlust von 0,2 dB aufweist.

Für die Versorgung der Wohneinheiten, die in 1,22 km Entfernung zum Splitter liegen, werden 49 Kabelsegmente benötigt, wobei zur Verbindung der Kabelsegmente jeweils zwei Kupplungen, die miteinander verbunden werden, benötigt werden. Die Anzahl der benötigten Kupplungen beträgt somit 98, was zu einem Verlust von 19,6 dB führt.

Bei sechs Wohneinheiten wird ein 1:8-Splitter benötigt, so dass ein zusätzlicher Verlust von 9 dB auftritt. Bei einem Stärke des Startsignals von 3 dB ergibt sich aufgrund der Kupplungsverluste von 19,6 dB und der Splitterverluste von 9 dB eine Empfangsleistung von - 25,6 dB. Diese liegt noch im zulässigen Bereich des Endgeräts, so dass das Endgerät damit funktionsfähig wäre.

Um ein stärkeres Signal am Endgerät zu erhalten wäre es möglich, die Anzahl der Kupplungen zu reduzieren, indem beispielsweise Kabelsegmente mit einer größeren Länge, beispielsweise von jeweils 50 m, 75 m oder 150 m genutzt werden. Die Längen der Kabelsegmente werden vorzugsweise so gewählt, dass diese jeweils in Zugangsschächten enden. Bei einem Abstand der Zugangsschächte von beispielsweise 25 m ergibt sich daraus eine Länge der Kabelsegmente, die jeweils ein Vielfaches von 25 m ist. Wenn die Verlegung so erfolgt, dass über einen Zugangsschacht jeweils mehrere Gebäude versorgt werden, beispielsweise bei Nutzung von Faserbündeln mit jeweils 12 Fasern drei oder sechs Gebäude, ist es auch möglich, einen größeren Abstand zwischen den Zugangsschächten vorzusehen. Entsprechend weisen in diesem Fall auch die einzelnen Kabelsegmente eine entsprechend größere Länge auf. Wenn mehrere Gebäude über einen Zugangsschacht versorgt werden, wird aus dem Zugangsschacht eine Einheit des Kabelbündels, beispielsweise mit 12 Fasern, geführt, wobei die Verteilung in die einzelnen Gebäude beispielsweise über eine Fanout-Struktur, die an die aus dem Zugangsschacht geführte Einheit angeschlossen wird, erfolgt.

### Beispiel 2 (Ermittlung der maximalen und minimalen Kabelstrecken)

Wie in Beispiel 1 wird davon ausgegangen, dass die Ausgangsleistung des Signals +3 dB beträgt, ein 1:8-Splitter eingesetzt wird, der einen Verlust von 9 dB hat, die Länge der einzelnen Kabelsegmente 25 m und der Kupplungsverlust 0,2 dB beträgt. Die Dämpfung des Glasfaserkabels wird wie in Beispiel 1 vernachlässigt.

Die Endleistung ergibt sich zu P_{Ende} = +3 dB - (0,4·N dB) - 9 dB = -6 dB - 0,4·N dB mit der Endleistung P_{Ende} und der Anzahl der Verbindungsstellen N.

Da das Signal am Endgerät nicht stärker sein darf als -8 dB ergibt sich daraus eine Anzahl N von 5 Kabelsegmenten. Damit wäre bei einer Strecke von weniger als 125 m der Pegel am Empfangsgerät höher als 8 dB und damit außerhalb des gewünschten Empfangsbereichs.

Entsprechend gilt für die Maximallänge, dass der Pegel am Endgerät nicht niedriger sein darf als -27 dB. Hier ergibt sich eine Anzahl von maximal 52 Kabelsegmenten, mit denen die geforderte Signalstärke noch erreicht wird und damit eine maximale Länge von 1300 m.

## Patentansprüche

1. Kabelkanalsystem zur Unterbodenverlegung von Kabeln (51), umfassend einen Kanal und einen Zugangsschacht (31), wobei der Zugangsschacht (31) eine Zugangsöffnung und mindestens eine Anschlussöffnung (37) oder Anschlusswanne (35) für den Kanal aufweist, wobei nach Verlegung des Kabelkanalsystems die Zugangsöffnung mit der Umgebungsoberfläche bündig abschließt und die mindestens eine Anschlussöffnung (37) oder Anschlusswanne (35) vollständig unterhalb der Umgebungsoberfläche angeordnet ist, wobei der Kanal modular aus Wannen (1; 35) und Deckeln (13) aufgebaut ist und die Deckel (13) von oben auf die Wannen (1; 35) aufsetzbar sind und nach dem Aufsetzen die Wannen (1; 35) verschließen.

2. Kabelkanalsystem gemäß Anspruch 1, **dadurch gekennzeichnet, dass** die Deckel (13) Stabilisierungsstege aufweisen.

3. Kabelkanalsystem gemäß Anspruch 1 oder 2, **dadurch gekennzeichnet, dass** im Boden (3) der Wannen (1; 35) und/oder des Zugangsschachts (31) Drainageöffnungen (9; 41) ausgebildet sind.

4. Kabelkanalsystem gemäß einem der Ansprüche 1 bis 3, **dadurch gekennzeichnet, dass** die Wannen (1; 35) mit Verbindungsstücken (21) verbunden sind, die die Wannen (1; 35) umschließen, wobei die Wannen (1; 35) vorzugsweise mit Nieten an den Verbindungsstücken (21) befestigt sind.

5. Kabelkanalsystem gemäß einem der Ansprüche 1 bis 4, **dadurch gekennzeichnet, dass** Stoßstellen der Deckel (13) mit Abdeckprofilen (43) überdeckt sind.

6. Kabelkanalsystem gemäß einem der Ansprüche 1 bis 5, **dadurch gekennzeichnet, dass** die Wannen (1; 35) Bodenstege (7.2) aufweisen, auf denen die Kabel (51) aufliegen.

7. Kabelkanalsystem gemäß einem der Ansprüche 1 bis 6, **dadurch gekennzeichnet, dass** Wannen (1; 35), Deckel (13) und Zugangsschächte (31) aus einem verstärkten Kunststoff gefertigt sind.

8. Kabelkanalsystem gemäß einem der Ansprüche 1 bis 7, **dadurch gekennzeichnet, dass** Multitfunktionsgehäuse mit einem Faser-Management-System umfasst sind, mit dem eingehende Kabel auf einzelne Anwender aufgeteilt werden.

9. Verfahren zur Verlegung von Kabeln mit einem Kabelkanalsystem gemäß einem der Ansprüche 1 bis 8, umfassend:
(a) Ausheben eines Grabens (49) mit einer Tiefe, in der der Kabelkanal verlaufen soll;
(b) Einbringen eines Zugangsschachts (31) in den Graben (49);
(c) Einlegen von Wannen (1) in den Graben (49), so dass eine erste Wanne (1) mit der Anschlussöffnung (37) im Zugangsschacht (31) oder mit einer am Zugangsschacht ausgebildeten Anschlusswanne (35) verbunden wird und mindestens zwei Wannen (1) zu einem Kanal verbunden werden;
(d) Einlegen mindestens eines Kabels (51) in den Kanal;
(e) Verschließen der Wannen (1) mit den Deckeln (13);
(f) Verfüllen des Grabens (49).

10. Verfahren gemäß Anspruch 9, **dadurch gekennzeichnet, dass** die Deckel (13) versetzt zu den Wannen (1; 35) positioniert werden.

11. Verfahren gemäß Anspruch 9 oder 10, **dadurch gekennzeichnet, dass** die Kabel (51) an ihren Enden jeweils eine Steckverbindung (63) aufweisen, wobei die Kabel (51) vorzugsweise eine solche Länge aufweisen, dass die Steckverbindungen (63) jeweils in einem Zugangsschacht (31) positioniert sind.

12. Verfahren gemäß einem der Ansprüche 9 bis 11, **dadurch gekennzeichnet, dass** Trassenkabel um Häuserblocks verlegt werden.

13. Verfahren gemäß einem der Ansprüche 9 bis 12, **dadurch gekennzeichnet, dass** die Verlegung in Gehwegen (45) oder Randbereichen erfolgt.

14. Verfahren gemäß einem der Ansprüche 9 bis 13, weiterhin umfassend:
(i) gegebenenfalls Durchführung einer Projektvorkalkulation zur Bestimmung einer ersten Kostenschätzung für Bau, Material und Personal in einem vorgegebenen Gebiet;
(ii) Durchführung einer Projektplanung mit Festlegung eines Trassenverlaufs entlang von Gehwegen mit minimaler Anzahl an Straßenquerungen sowie des benötigten Material- und Personalbedarfs;
(iii) Durchführen des Verfahrens gemäß Anspruch 9, wobei während des Einlegens der Wannen (1) und der Kabel (51) das die tatsächlich eingesetzte Materialmenge an die Projektplanung übertragen wird;
(iv) Neufestlegung des benötigten Materialbedarfs anhand der tatsächlich eingesetzten Materialmenge;
(v) Dokumentation des Baus des Kabelkanalsystems und der Verlegung der Kabel.

15. Verfahren gemäß Anspruch 14, **dadurch gekennzeichnet, dass** die Projektkalkulation, die Durchführung der Projektplanung, die Neufestlegung des benötigten Materialbedarfs und die Dokumentation computerprogrammgesteuert erfolgt, wobei die tatsächlich eingesetzte Materialmenge mittels eines mobilen Endgeräts erfasst wird.

## Geänderte Patentansprüche

### Geänderte Patentansprüche gemäss Regel 137(2) EPÜ.

1. Kabelkanalsystem zur Unterbodenverlegung von Kabeln (51), umfassend einen Kanal und mindestens zwei Zugangsschächte (31), wobei die mindestens zwei Zugangsschächte (31) jeweils eine Zugangsöffnung und mindestens eine Anschlussöffnung (37) oder Anschlusswanne (35) für den Kanal aufweisen, wobei nach Verlegung des Kabelkanalsystems die Zugangsöffnung mit der Umgebungsoberfläche bündig abschließt und die mindestens eine Anschlussöffnung (37) oder Anschlusswanne (35) vollständig unterhalb der Umgebungsoberfläche angeordnet ist, wobei der Kanal modular aus Wannen (1; 35) und Deckeln (13) aufgebaut ist und die Deckel (13) von oben auf die Wannen (1; 35) aufsetzbar sind und nach dem Aufsetzen die Wannen (1; 35) verschließen, und wobei das Kabelkanalsystem weiterhin Kabel (51) umfasst, die so konfektioniert sind, dass diese jeweils von einem Zugangsschacht (31) bis zu einem nachfolgenden Zugangsschacht (31) verlegt werden können, so dass im Kanal keine Verbindungsstellen enthalten sind, und wobei die Kabel (51) an ihren Enden jeweils Steckverbindungen (63) aufweisen, so dass die Kabel (51) im Zugangsschacht (31) über die Steckverbindungen (63) miteinander verbunden werden können.

2. Kabelkanalsystem gemäß Anspruch 1, **dadurch gekennzeichnet, dass** die Deckel (13) Stabilisierungsstege aufweisen.

3. Kabelkanalsystem gemäß Anspruch 1 oder 2, **dadurch gekennzeichnet, dass** im Boden (3) der Wannen (1; 35) und/oder des Zugangsschachts (31) Drainageöffnungen (9; 41) ausgebildet sind.

4. Kabelkanalsystem gemäß einem der Ansprüche 1 bis 3, **dadurch gekennzeichnet, dass** die Wannen (1; 35) mit Verbindungsstücken (21) verbunden sind, die die Wannen (1; 35) umschließen, wobei die Wannen (1; 35) vorzugsweise mit Nieten an den Verbindungsstücken (21) befestigt sind.

5. Kabelkanalsystem gemäß einem der Ansprüche 1 bis 4, **dadurch gekennzeichnet, dass** Stoßstellen der Deckel (13) mit Abdeckprofilen (43) überdeckt sind.

6. Kabelkanalsystem gemäß einem der Ansprüche 1 bis 5, **dadurch gekennzeichnet, dass** die Wannen (1; 35) Bodenstege (7.2) aufweisen, auf denen die Kabel (51) aufliegen.

7. Kabelkanalsystem gemäß einem der Ansprüche 1 bis 6, **dadurch gekennzeichnet, dass** Wannen (1; 35), Deckel (13) und Zugangsschächte (31) aus einem verstärkten Kunststoff gefertigt sind.

8. Kabelkanalsystem gemäß einem der Ansprüche 1 bis 7, **dadurch gekennzeichnet, dass** Multitfunktionsgehäuse mit einem Faser-Management-System umfasst sind, mit dem eingehende Kabel auf einzelne Anwender aufgeteilt werden.

9. Verfahren zur Verlegung von Kabeln mit einem Kabelkanalsystem gemäß einem der Ansprüche 1 bis 8, umfassend:
(a) Ausheben eines Grabens (49) mit einer Tiefe, in der der Kabelkanal verlaufen soll;
(b) Einbringen eines Zugangsschachts (31) in den Graben (49);
(c) Einlegen von Wannen (1) in den Graben (49), so dass eine erste Wanne (1) mit der Anschlussöffnung (37) im Zugangsschacht (31) oder mit einer am Zugangsschacht ausgebildeten Anschlusswanne (35) verbunden wird und mindestens zwei Wannen (1) zu einem Kanal verbunden werden;
(d) Einbringen eines weiteren Zugangsschachts (31) in den Graben (49) und Verbinden des Zugangsschachts (31) mit dem Kanal;
(e) Einlegen mindestens eines Kabels (51) in den Kanal, wobei das Kabel (51) an den Enden jeweils eine Steckverbindung (63) aufweist und wobei das Kabel (51) eine solche Länge aufweist, dass die Steckverbindungen (63) jeweils in einem Zugangsschacht (31) positioniert werden können;
(f) Verbinden der Kabel (51) im Zugangsschacht (31) über die Steckverbindung (63);
(g) Verschließen der Wannen (1) mit den Deckeln (13);
(h) Verfüllen des Grabens (49).

10. Verfahren gemäß Anspruch 9, **dadurch gekennzeichnet, dass** die Deckel (13) versetzt zu den Wannen (1; 35) positioniert werden.

11. Verfahren gemäß Anspruch 9 oder 10, **dadurch gekennzeichnet, dass** Trassenkabel um Häuserblocks verlegt werden.

12. Verfahren gemäß einem der Ansprüche 9 bis 11, **dadurch gekennzeichnet, dass** die Verlegung in Gehwegen (45) oder Randbereichen erfolgt.

13. Verfahren gemäß einem der Ansprüche 9 bis 12, weiterhin umfassend:
(i) gegebenenfalls Durchführung einer Projektvorkalkulation zur Bestimmung einer ersten Kostenschätzung für Bau, Material und Personal in einem vorgegebenen Gebiet;
(ii) Durchführung einer Projektplanung mit Festlegung eines Trassenverlaufs entlang von Gehwegen mit minimaler Anzahl an Straßenquerungen sowie des benötigten Material- und Personalbedarfs;
(iii) Durchführen des Verfahrens gemäß Anspruch 9, wobei während des Einlegens der Wannen (1) und der Kabel (51) das die tatsächlich eingesetzte Materialmenge an die Projektplanung übertragen wird;
(iv) Neufestlegung des benötigten Materialbedarfs anhand der tatsächlich eingesetzten Materialmenge;
(v) Dokumentation des Baus des Kabelkanalsystems und der Verlegung der Kabel.

14. Verfahren gemäß Anspruch 13, **dadurch gekennzeichnet, dass** die Projektkalkulation, die Durchführung der Projektplanung, die Neufestlegung des benötigten Materialbedarfs und die Dokumentation computerprogrammgesteuert erfolgt, wobei die tatsächlich eingesetzte Materialmenge mittels eines mobilen Endgeräts erfasst wird.
